(19) Europäisches Patentamt
European Patent Office
Office européen des brevets

(11) EP 1 660 404 B1

(12) **EUROPEAN PATENT SPECIFICATION**

(45) Date of publication and mention of the grant of the patent:
**05.08.2015 Bulletin 2015/32**

(21) Application number: **04751428.6**

(22) Date of filing: **06.05.2004**

(51) Int Cl.:
***C01B 3/00*** *(2006.01)*

(86) International application number:
**PCT/US2004/014034**

(87) International publication number:
**WO 2005/000457 (06.01.2005 Gazette 2005/01)**

# (54) HYDROGEN STORAGE REVERSIBLE HYDROGENATED OF PI-CONJUGATED SUBSTRATES

WASSERSTOFFSPEICHERUNG DURCH REVERSIBLE HYDRIERUNG VON PI-KONJUGIERTEN SUBSTRATEN

STOCKAGE D'HYDROGENE PAR HYDROGENATION REVERSIBLE DE SUBSTRATS CONJUGUES-PI

(84) Designated Contracting States:
**AT BE BG CH CY CZ DE DK EE ES FI FR GB GR HU IE IT LI LU MC NL PL PT RO SE SI SK TR**

(30) Priority: **06.05.2003 US 430246**
**27.04.2004 US 833467**
**27.04.2004 US 833484**

(43) Date of publication of application:
**31.05.2006 Bulletin 2006/22**

(73) Proprietor: **AIR PRODUCTS AND CHEMICALS, INC.**
**Allentown, PA 18195-1501 (US)**

(72) Inventors:
- **PEZ, Guido, Peter**
  **Allentown, PA 18103 (US)**
- **SCOTT, Aaron, Raymond**
  **Allentown, PA 18104 (US)**
- **COOPER, Alan, Charles**
  **Macungie, PA 1806 (US)**
- **CHENG, Hansong**
  **Allentown, PA 18106 (US)**
- **BAGZIS, Larry, David**
  **Allentown, PA 18104 (US)**
- **APPLEBY, John, Bruce**
  **Perkiomenville, PA 18074 (US)**

(74) Representative: **Maiwald Patentanwalts GmbH**
**Elisenhof**
**Elisenstrasse 3**
**80335 München (DE)**

(56) References cited:
**WO-A2-02/38494** **US-A- 4 567 033**
**US-A- 5 703 378** **US-A- 6 074 447**

- **KARIYA N ET AL: "Efficient evolution of hydrogen from liquid cycloalkanes over Pt-containing catalysts supported on active carbons under ''wet-dry multiphase conditions''" APPLIED CATALYSIS A: GENERAL, ELSEVIER SCIENCE, AMSTERDAM, NL LNKD- DOI: 10.1016/S0926-860X(02)00139-4, vol. 233, no. 1-2, 10 July 2002 (2002-07-10), pages 91-102, XP004367106 ISSN: 0926-860X**
- **"Hyforum 2000" September 2000 (2000-09), , XP8124399 , pages 335-341 * page 335 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 660 404 B1

## Description

### 1. FIELD OF THE INVENTION

This invention relates to processes for the reversible hydrogenation of pi-conjugated substrates to provide for the storage and release of hydrogen at practical operating temperatures and pressures, particularly for supplying hydrogen to fuel cells. Hydrogen is a widely used chemical commodity in the chemical and petroleum processing industries, but with the relatively recent development of fuel cells it is increasingly also being considered as a viable "clean" energy source. Stationary fuel cells can be supplied with hydrogen from on-site natural gas reformers or via existing hydrogen pipeline sources. However, for mobile vehicular systems, a practical and effective method for storing hydrogen to power an on-board fuel cell or a hydrogen fuelled internal combustion engine is required. The transport of hydrogen as a cryogenic liquid, although technologically well established, is an energy-intensive process which results in a significantly higher cost of the delivered gas. Hydrogen is also conventionally transported as a compressed gas in steel cylinders, but the storage capacity is relatively low. Higher gravimetric storage amounts, but at relatively low volumetric densities, can now be achieved with hydrogen gas at very high pressures up to 10,000 psi (690 bar) in light-weight containers made of very high strength composite materials. There are significant energy costs in thus compressing the gas as well as potential issues regarding consumers' acceptance of systems that contain hydrogen at such elevated pressures.

It is thus necessary and highly desirable to devise a means of storing and delivering hydrogen safely, at an adequate gravimetric and volumetric storage density and with a minimal consumption of energy. This may be accomplished by "containing" the hydrogen in a suitable solid, or potentially even in liquid sorbent media, compositions which have a substantial but reversible affinity for the gas. The gas is contacted with the sorbent at modest temperatures and hydrogen pressures and is released for use as required, by lowering the system's hydrogen partial pressure at the same or a higher temperature. Hydrogen uptake by the sorbent is usually an exothermic process, while the release of hydrogen for use requires at least the corresponding input of thermal energy which can be met from the fuel cell's or internal combustion engine's waste heat. Thus, in contrast to compressed hydrogen-based storage systems, the necessary energy needed for containing the hydrogen (i.e. its heat of adsorption) can thus largely be met without significant consumption of higher grade electrical energy for compression. Also, there is a considerably increased safety factor in a sorbed hydrogen. Since any desorption process is endothermic, it will be naturally self-retarding and the hydrogen will not spontaneously totally desorb without an external input of heat.

### 2. BACKGROUND OF THE INVENTION

The challenge in this sorbent approach to hydrogen storage is in devising the appropriate functioning sorbent media. Much of the research on containing hydrogen in this way has focused on the property of various metals and metal alloys to reversibly chemically combine with hydrogen to form metal hydrides. Representative examples are FeTi; TiV alloys; $LaNi_5$; various magnesium-nickel combinations; and sodium alanate, $NaAlH_4$, which can reversibly dissociate in the presence of some catalysts into Al, NaH and $H_2$. There is a substantial literature on metal hydrides and while research is still being actively pursued in this field for instance on tri- and multi-metal hydrides, demonstrated gravimetric hydrogen capacities are still well short of the 6+ wt % hydrogen that are required for vehicular hydrogen storage.

There have recently been a number of claims of hydrogen storage by various forms of carbon: as single wall nanotubes by A. C. Dillon et al. in Nature 386, 377-379 (1997); and as graphitic nanofibers by Chambers et al. in J. Phys. Chem. B 102, 4253-4256 (1998). However, these and other literature claims of a substantial hydrogen containment by carbons [see A. C. Dillon and M. J. Heben in Appl. Phys. A 72, 133-142 (2001)] have not been specifically confirmed by other investigators; the field of hydrogen sorption by carbons has remained an open area of research. In this context, Cooper and Pez in U.S. Patent Application Publication No. 20020096048 have reported that intimate combinations of hydrogen reactive metals or metal alloys, or metal hydrides with various forms of substantially graphitic carbon, i.e. carbon-metal hybrids, display a reversible uptake of hydrogen at near ambient conditions and are useful as pressure-swing and temperature-swing sorbents for the storage of hydrogen. The observed reversible facile hydrogen reactivity is theorized to occur either by a "hydrogen-spillover" mechanism or by a partial reversible metal-catalyzed hydrogenation of the unsaturated graphitic carbon structures.

A recent report by S. J. Cho et al. in ACS Fuel Chemistry Division Preprints 47(2), 790-791 (2002) claims the adsorption of hydrogen by the hydrochloric acid-doped conducting polymers polyaniline and polypyrrole. These polymers are exposed to high pressure (1350 psia, 93 bar) hydrogen at 25°C resulting in an apparent slow uptake of hydrogen gas. The hydrogen gas is desorbed by heating the sample to 200°C at an unspecified gas pressure. The authors speculate that the hydrogen is physically adsorbed (i.e., the H-H bond remains intact) in the porous conducting polymers. Samples that were not treated with hydrochloric acid, which apparently induces porosity in the polymer samples, did not show any uptake of hydrogen. No metal catalysts are reported to be present in the material and no indication for chemical adsorption of hydrogen or catalytic hydrogenation of the polymer is given in this publication.

The possibility of storing hydrogen via the catalytic hydrogenation and then dehydrogenation of common aromatic molecules such as benzene or toluene has long been disclosed as a means of storing the hydrogen. With a theoretical hydrogen storage capacity of about 7 weight percent, the systems seem attractive. But while this chemistry is carried out routinely in chemical plants there are numerous difficulties in utilizing it in a practical hydrogen storage device.

The principal obstacles are as follows:

With the appropriate metal catalysts, the hydrogenation of benzene, toluene, naphthalene and related one or two six-membered ring aromatics to the corresponding saturated cyclic hydrocarbons, cyclohexane, methylcyclohexane and decalin, respectively, can be conducted at relatively mild conditions, e.g. ~100°C and ~100 psi (6.9 bar) of hydrogen pressure, where it is thermodynamically very favorable. However, dehydrogenation of the above cited corresponding alkanes to produce hydrogen gas at the about 20 psia (1.5 bar) and higher delivery pressures that are required for use in fuel cells is, as currently carried out, a highly endothermic process and thus requires the use of higher reaction temperatures that are not easily obtainable from fuel cells, especially those presently used in vehicles, as well as a significant input of energy. Thus, U.S. Patent No. 4,567,033 to Kesten et al. describes a method of "freeing" molecular hydrogen from methylcyclohexane by its dehydrogenation to toluene at 316°C, the required thermal input being supplied by a combustion of a considerable portion of the by-product hydrogen.

Additionally, the common one or two six-membered ring aromatic molecules are quite volatile as are their hydrogenated products. While the hydrogenation can be conducted in a closed system, the production of product hydrogen from the reverse reaction fundamentally requires that there be some means of totally separating the gas from the reaction's organic volatile components. While technically possible, this requires 3 further unit operation which increases the complexity and hence the cost of the hydrogen storage process.

There have been several attempts to provide practical processes for storing hydrogen via a reversible hydrogenation of aromatics. U.S. Patent No. 6,074,447 to Jensen et al. describes a means of dehydrogenating a hydrocarbon to an aromatic and hydrogen in the presence of a particular iridium-based molecular complex catalyst at preferably 190°C or higher. Specifically described hydrocarbons are methylcyclohexane, decalin, dicyclohexyl, and cyclohexane (for which the corresponding aromatic products are toluene, naphthalene, biphenyl and benzene); there is no mention of any larger hydrogenated hydrocarbons or the polycyclic aromatic hydrocarbons or other pi-conjugated molecules of this invention. Additionally, the envisaged substrates of this prior art are clearly volatile at reaction temperatures and the reaction chamber is thus necessarily provided with a membrane that is highly selective for the passage of hydrogen as compared to the other volatile reaction components which are retained in the reaction chamber.

N. Kariya et al. have recently reported in Applied Catalysis A, 233, 91-102 (2002) what is described to be an efficient generation of hydrogen from liquid cycloalkanes such as cyclohexane, methylcyclohexane and decalin over platinum and other platinum-containing catalysts supported on carbon. The process is carried out at from about 200°C to 400°C under "wet-dry multiphase conditions", which involves intermittently contacting the saturated liquid hydrocarbon with the heated solid catalyst in a way such that the catalyst is alternately wet and dry. Because of local superheating and other cited factors the dehydrogenation reaction is rendered more efficient in terms of improved reaction kinetics but because of the reaction thermodynamics *(vide infra)* it still requires the use of relatively high temperatures for a high conversion of the cyclohexane to the corresponding aromatic molecule. This basic process is elaborated on in several Japanese patent applications (e.g. JP20001110437 and JP2002134141) where it is applied citing benzene, toluene, xylene, mesitylene, naphthalene, anthracene, biphenyl, phenanthrene and their alkyl derivatives as possible aromatic substrates as a means of producing hydrogen for fuel cells. It is evident however, that for this and other implementations of the process, active means for totally separating the product hydrogen from the volatile components of the process need to be employed.

R.O. Loufty and E.M. Vekster, in "Investigation of Hydrogen Storage in Liquid Organic Hydrides", Proceedings of the International Hydrogen Energy Forum 2000, Munich Germany, 2000; pp. 335-340, have reported the dehydrogenation of decalin in a membrane reactor where the very low conversion (~15%) of decalin, even at 300°C, is greatly enhanced by the selective separation of hydrogen by the membrane and its removal from the reactor.

JP2002134141 A describes "liquid hydrides" based on phenyl-substituted silanes; aryl-substituted oligomers and low molecular weight polymers of ethylene; low molecular weight polymers of phenylene; and oligomers of aryl- and vinyl-substituted siloxanes where the aryl groups are phenyl, tolyl, naphthyl and anthracyl group.

In spite of the work described above, there remains a need for processes for the reversible hydrogenation of pi-conjugated substrates to provide for the storage and release of hydrogen at practical operating temperatures and pressures, particularly for supplying hydrogen to fuel cells.

Recyclable liquid fuels that have generated recent interest include liquid aromatic compounds such as benzene, toluene and naphthalene ("the aromatic substrates"), which undergo reversible hydrogenation to form cyclohexane, methylcyclohexane and decalin ("the hydrogenated substrates"), respectively. The hydrogenated substrates are provided to a dehydrogenation system and hydrogen fuel cell where, under suitable conditions, the hydrogenated substrates

dehydrogenate to form hydrogen for use by the fuel cell, and the aromatic substrate is recovered. For example, U.S. Patent No. 6,074,447 to Jensen describes dehydrogenating methylcyclohexane, decalin, dicyclohexyl, and cyclohexane to toluene, naphthalene, biphenyl and benzene, respectively, in the presence of a particular iridium based molecular complex catalyst at preferably 190°C or higher.

An attractive feature of using a hydrogen carrier based on liquid aromatic compounds is that it offers the possibility of using the existing liquid hydrocarbon-fuel infrastructure for hydrogenating, delivering and storing the liquid-phase hydrogen carrier. In contrast, the delivery and storage of hydrogen as either a cryogenic liquid or a compressed gas would require different methods of storage and transportation. In addition, the use of compressed hydrogen would incur considerable energy costs in compressing the gas as well as potential issues regarding consumers' acceptance of systems that contain hydrogen at such elevated pressures.

In principle, liquid hydrogenated substrates are easily transported using conventional methods for liquid transport and distribution (pipelines, railcars, tanker trucks). Likewise, liquid hydrogenated substrates can be delivered to a mobile or stationary fuel cell using a conventional gasoline dispensing nozzle. At the point of use, a dehydrogenation reaction is carried out to generate hydrogen for use by the fuel cell and the dehydrogenated substrate (*i.e.*, the aromatic substrate). The aromatic substrate is collected in a recovery tank and is later returned to a hydrogenation facility where it is reacted with hydrogen to regenerate the hydrogenated substrate.

Chem. Eng., 21 (March 2003) describes the use of liquid organic hydrides by hydrogenating benzene and naphthalene to form cyclohexane and decalin, and transporting the hydrogenated compounds to user's site.

A process for delivering hydrogen contained by a liquid substrate ("liquid hydride") to a fuel cell vehicle or a stationary power source using the existing fossil fuel infrastructure is described in G. Pez, Toward New Solid and Liquid Phase Systems for the Containment, Transport and Deliver of Hydrogen," May 2003, (see http://www.eere.energy.gov/hydrogenandfuelcells/pdfs/solid_liquid_carriers_pres_air_pro d.pdf). The Pez reference describes a process where the liquid substrate is hydrogenated at a hydrogenation plant, and the resultant liquid hydride is delivered to a multi-vehicle fueling station or stationary power source using existing gasoline or diesel delivery methods. The Pez reference notes that a lightweight mid-size fuel cell vehicle could be driven about 400 miles on 18 gallons of a liquid hydride having a density of about 1 g/cc and containing 6 wt.% of desorbable hydrogen.

S. Hodoshima et al., Int. J. Hydrogen Energy 28:1255-1262 (2003) describes using decalin and naphthalene as the hydrogenated substrate and aromatic substrate, respectively. The Hodoshima reference further teaches that naphthalene could be hydrogenated with hydrogen generated by electrolysis of water using renewable energy sources such as windpower.

E. Newsome et al., Int. J. Hydrogen Energy 23: 905-909 (1998) describes using methylcyclohexane and toluene as the hydrogenated substrate and aromatic substrate, respectively, and further teaches that the liquid hydride could be formed and stored in summer months for use in winter months.

## 3. <u>BRIEF SUMMARY OF THE INVENTION</u>

The present invention provides a means of capturing and thereby storing hydrogen by its chemical reaction, conducted at moderate temperatures, in the presence of a catalyst, with a substrate having an extended pi-conjugated molecular structure as defined herein to yield the corresponding substantially hydrogenated form of the pi-conjugated system. As used herein, "hydrogenate", including in its various forms, means to add hydrogen to saturate unsaturated bonds, and does not include hydrogen cleavage of molecules or hydrogenolysis (i.e., breaking of carbon-carbon or carbon-heteroatom linkages). A delivery of the stored hydrogen is accomplished simply by reducing the pressure of hydrogen, and/or raising the temperature, both of which promote the corresponding dehydrogenation reaction.

In one embodiment, the pi-conjugated substrates of our invention can be reversibly catalytically hydrogenated at milder reaction conditions and with a lesser expenditure of energy than those of the prior art, i.e. principally benzene, toluene and naphthalene. The extended pi-conjugated substrate and its hydrogenated derivative are for the most part relatively large molecules, and are therefore relatively involatile, thus being easily separable from the product hydrogen stream. While a high degree of hydrogenation and dehydrogenation is advantageous to be an effective and practical hydrogen storage system, at least partial hydrogenation and dehydrogenation, preferably wherein the reversible hydrogen uptake of the extended pi-conjugated substrate is at least 1.0 % of by weight of the at least partially hydrogenated substrate, yields an effective and practical hydrogen storage economy.

As demonstrated herein by quantum mechanics based thermodynamics calculations and supporting experimental data, a reversible hydrogenation of extended pi-conjugated aromatic molecules is generally thermodynamically more favorable; it can be carried out at a lower temperature than is possible with the commonly used as cited in Section 2, one, two, or three six-membered ring aromatic substrates of the prior art. Essentially, the modulus of the heat or enthalpy of the (exothermic) hydrogenation reaction and of the (endothermic) dehydrogenation step is reduced, thus resulting in a hydrogenation/dehydrogenation system which is more easily reversible at modest and practical temperatures. An added advantage of using the extended pi-conjugated substrates is that they and their hydrogenated derivatives

are far less volatile, thus precluding the need for a separate unit operation for totally separating these from the product hydrogen thus greatly simplifying the overall hydrogen storage equipment and its process of operation.

The details of the invention are set forth in the accompanying figures, detailed description and examples below.

## 4. **BRIEF DESCRIPTION OF SEVERAL VIEWS OF THE DRAWINGS**

Fig. 1 is a comparison of the enthalpy change for hydrogenating three "isolated" double bonds, exemplified by three molecules of cyclohexene, to cyclohexane and of hydrogenating benzene to the same product. $\Delta H_3$ is the pi-conjugation or resonance stabilization energy for benzene.

Fig. 2 shows the enthalpy changes, $\Delta H°$, associated with the formation of conformers as exemplified by the hydrogenation of naphthalene to *cis*- and *trans*-decalin.

Fig. 3 shows the hydrogenation reaction enthalpies, $\Delta H^o_{H2}$ at standard conditions (25°C, 1 atm.) for the numbered hydrogenation/dehydrogenation reaction systems, as identified in Table 1. Calc. = calculated using the *ab initio* DFT density functional theory method; Exp. = published experimental data. *Calculated and experimental data at 150°C.

Fig. 4 shows the hydrogenation of certain extended pi-conjugated substrates where all of the unsaturated linkages of the pi-unsaturated substrate have been hydrogenated.

Fig. 5 shows the calculated dehydrogenation temperature for a 95.24% equilibrium conversion of the saturated, fully hydrogenated carrier molecule, A-$H_2$n back to the pi-conjugated substrate, A, at 1 atm. $H_2$ pressure, i.e., where K of Equation 3 is 0.05 atm.$^{-n}$. Calc. = calculated using the *ab initio* DFT density functional theory method; Exp. = calculated from experimental data. The numbers refer to the hydrogenation substrate shown in Tables 1a-1d. *Calculated using our experimental enthalpy data (Example 13) and computationally derived entropy values.

Fig.6 is a plot of the calculated standard enthalpies of hydrogenation $(\Delta H^o_{H2})$ for three structural classes of polyaromatic hydrocarbons as a function of the number of fused aromatic rings (the representations of double bonds, or aromatic sextets, have been omitted for simplicity). The PM3 method was used for the calculations.

Fig. 7 is a plot of the calculated standard enthalpies of hydrogenation $(\Delta H^o_{H2})$ for two isostructural series of polyaromatic hydrocarbons, with and without nitrogen substitution, as a function of the number of fused aromatic rings (the representations of double bonds, or aromatic sextets, have been omitted for simplicity). The PM 3 method was used for the calculation.

Fig. 8 is a plot of the hydrogen adsorption vs. time of a sample (Example 3) of coronene with 5% Rh on carbon catalyst.

Fig. 9 is a plot of the hydrogen desorption vs. time of a sample (Example 3) of coronene with 5% Rh on carbon catalyst.

Fig. 10 is a plot of the hydrogen adsorption vs. time, for two consecutive cycles, of a sample (Example 4) of coronene with palladium metal catalyst.

Fig. 11 is a plot of the hydrogen desorption vs. time, cycle #1, of a sample (Example 4) of coronene with palladium metal catalyst.

Fig. 12 is a plot of the hydrogen desorption vs. time, cycle #2, of a sample (Example 4) of coronene with palladium metal catalyst.

Fig. 13 is a plot for 5 consecutive cycles of the hydrogen desorption vs. time of a sample (Example 10) of N-ethylcarbazole with ruthenium on lithium aluminate and palladium on lithium aluminate catalysts.

Fig. 14 is a plot of the hydrogen desorption vs. time of a sample (Example 11) of N-ethylcarbazole with palladium on lithium aluminate catalyst.

Fig. 15 is a schematic of a continuous flow dehydrogenation reactor (Example 12).

Fig 16 is a plot of the hydrogen desorption at 180°C vs. time of a sample (Example 15) of 1-ethyl-2-methylindole

with palladium on alumina catalyst.

Fig 17 is a plot of the hydrogen desorption at 160°C vs. time of a sample (Example 15) of 1-ethyl-2-methylindole with palladium on alumina catalyst.

Fig. 18 is a plot of the hydrogen adsorption vs. time of a sample (Comparative Example 1) of pentacene with 5% Rh on carbon catalyst.

Fig. 19 is a plot of the hydrogen desorption vs. time of a sample (Comparative Example 1) of pentacene with 5% Rh on carbon catalyst.

## 5. DETAILED DESCRIPTION OF THE INVENTION

### 5.1 STORAGE OF HYDROGEN USING PI-CONJUGATED SUBSTRATES

Provided herein is a process for the storage of hydrogen by its reversible chemical reaction with extended pi-conjugated substrates. It may be carried out with extended pi-conjugated substrates as herein defined and with reaction parameters, as illustrated by the following computational and experimental examples.

Pi-conjugated (often written in the literature using the Greek letter n) molecules are structures which are characteristically drawn with a sequence of alternating single and double bonds. But this representation of the chemical bonding is only a means of recognizing such molecules by their classical valence bond structures. It does not alone provide a description of their useful properties in the context of this invention for which concepts of modern molecular orbital theory of bonding need to be invoked.

In molecular orbital theory, the classically written single bond between two atoms is referred to as a σ-bond, and arises from a bonding end-on overlap of two dumbbell shaped "p" electron orbitals. It is symmetrical along the molecular axis and contains the two bonding electrons. In a "double" bond, there is, in addition, a side-on overlap of two "p" orbitals that are perpendicular to the molecular axis and is described as a pi-bond (or "Π-bond"). It also is populated by two electrons but these electrons are usually less strongly held, and more mobile. A molecule that comprises (is depicted as) a sequence of alternating single and double bonds is described as a "pi-conjugated system" in the sense that the pi-electrons of the double bonds can be delocalized over this sequence for the entire molecule. The consequence of this is that the pi-conjugated molecule has a lower overall energy, i.e. is more stable than if its pi-electrons were confined to or localized on the double bonds. This is well evident experimentally in the simplest pi-conjugated system, *trans*-1,3-butadiene. The heat (enthalpy) change at standard conditions (1 atm. pressure, 25°C) for hydrogenating the two double bonds to yield butane is -56.24 kcal/mole as compared to a total of -60.06 kcal/mole for hydrogenating two molecules of 1-butene to the same end product. Thus, 1,3-butadiene is more stable by 3.82 kcal/mol because of the internal conjugation, as evidenced by the lower modulus (absolute value) of the negative enthalpy of hydrogenation. As illustrated in Fig. 1, a much larger stabilization from pi-conjugation of 35.6 kcal/mol can be calculated in the same way for benzene compared to cyclohexane and is referred to as its aromatic stabilization energy.

The practical consequence of this additional stability that can be achieved with extended pi-conjugated substrates is that it brings these closer in energy to their corresponding saturated or fully hydrogenated derivatives, i.e. minimizing $\Delta H_2$ in Fig. 1 thus making possible hydrogen storage via catalytic hydrogenation/dehydrogenation processes that are more easily reversible at mild temperatures and are less energy intensive.

This concept can be fully quantified in terms of the basic thermodynamic parameters, enthalpy (ΔH), entropy (ΔS), Gibbs free energy (ΔG), and the equilibrium constant K, for the reversible hydrogenation reaction of substrate A to $A\text{-}H_{2n}$:

$$A + nH_2 \overset{K}{\longleftrightarrow} A - H_{2n} \text{------ (1)}$$

by the familiar thermodynamic relationship:

$$\Delta G = -RT\ln K = \Delta H - T\Delta S \text{------(2)}$$

where R is the ideal gas constant, T is the reaction temperature (in degrees Kelvin), and where

$$K = [A\text{-}H_{2n}]/[A]P^n_{H2} \text{ -------(3)}$$

where the terms in [] refer to concentration or partial pressure of A and $AH_{2n}$ and $P_{H2}$ designates the hydrogen partial pressure.

The enthalpy change ($\Delta H$) for hydrogenation of A to $A\text{-}H_{2n}$ at the standard state of 25°C and 1 atm. $H_2$ will henceforth be referred to as $\Delta H^o_{H2}$. Unless otherwise indicated experimentally derived and computational $\Delta H^o_{H2}$ data herein refers to compositions in their standard state as gases at 1 atm., 25°C. The most common highly conjugated substrates are the aromatic compounds, benzene and naphthalene. While these can be readily hydrogenated at, e.g., 10-50 atm. at $H_2$ at ca 150°C in the presence of appropriate catalysts, the reverse reaction - an extensive catalytic dehydrogenation of cyclohexane and decahydronaphthalene (decalin) at about 1 atm. $H_2$ is only possible at much higher temperatures *(vide infra).* For a practical $H_2$, storage system it is desirable to have the dehydrogenation provide $H_2$ at 1-3 atm. at ca 200°C for potential use in conjunction with a hydrogen internal combustion engine and preferably at lower temperatures, e.g., 80°C-120°C, where present day PEM fuel cells operate. The lower dehydrogenation temperatures are also desirable for maintaining the reacting system in a condensed state (solid or preferably liquid) and minimizing coking and other problems that are often encountered in higher temperature catalytic dehydrogenation reactions.

For the hydrogenation of benzene to cyclohexane, a system which has been described in the prior art for hydrogen storage, the experimental enthalpy change at standard conditions (1 atm. pressure gas, 25°C), $\Delta H°$, is -16.42 kcal/mol $H_2$; $\Delta G$ at 80°C is -6.17 kcal/mol $H_2$, with a corresponding K=2.91 x $10^{11}$ atm.$^{-1}$ and approaches a zero value only at about 280°C (where K = 1.1 atm.$^{-3}$). As shown in Fig. 5, the temperature required for a 95.24% conversion of cyclohexane to benzene (1), at equilibrium (K = 0.05) for this system at 1 atm. $H_2$ is 319°C (Table 1a).

For the hydrogenation of naphthalene (liquid), $C_{10}H_8$, to *cis-* decalin (liquid), $C_{10}H_{18}$, (which has also been investigated as a hydrogen storage system), the experimental $\Delta H°$= -15.13 kcal/mol $H_2$ and $\Delta G$ at 80°C is -4.87 kcal/mol $H_2$ and approaches zero only at about 235°C (where K = 0.8 atm.$^{-1}$). The temperature for 95.24% conversion of naphthalene, $C_{10}H_8$, to *cis-* decalin $C_{10}H_{18}$, at equilibrium (K = 0.05) for this system at 1 atm. $H_2$ is 319°C (see Table 1a, 2). Therefore, it is very clear that with the reversible hydrogenation systems of the prior art, a recovery of hydrogen that is stored by hydrogenation will only be possible at quite elevated temperatures. And in addition, as noted earlier, these prior art systems all comprise highly volatile components, which would require another unit operation for their separation from hydrogen.

Described here are extended pi-conjugated substrates which can advantageously be reversibly hydrogenated at much milder conditions than for benzene and naphthalene and are not appreciably volatile, thus precluding the need of a complex separation process for the evolved recovered hydrogen. In one embodiment, these hydrogenated extended pi-conjugated substrates can be dehydrogenated at temperatures below 250°C while at hydrogen partial pressures of greater than 1.449 psia (0.1 bar) and even at pressures in excess of 14.49 psia (1.0 bar) as will be shown by the examples. This is highly unexpected since temperatures required to effect dehydrogenation increase significantly with increasing hydrogen partial pressures. An added advantage of the extended pi-conjugated substrates of this invention is the relative involatility of the substrate, both in hydrogenated and dehydrogenated states, as this eases the separation of the released hydrogen for subsequent usage.

In another embodiment, these hydrogenated extended pi-conjugated substrates can be dehydrogenated at temperatures below 300°C while at hydrogen partial pressures of greater than 1.449 psia (0.1 bar) and even at pressures in excess of 14.49 psia (1.0 bar) as will be shown by the examples.

Equations 2 and 3 fully define the thermodynamic boundaries for the reversible hydrogenation of substrate, A in Equation 1. The enthalpy and entropy change terms for Equation 1, $\Delta H$ and $\Delta S$, respectively, are arrived at from the corresponding experimentally or computationally derived thermodynamic functions for the reaction components, A, $A\text{-}H_{2n}$ and hydrogen. Temperature and hydrogen pressure are process parameters, which for a set of values of $\Delta H$ and $\Delta S$, may be chosen for attaining at reaction equilibrium a high conversion of A to $A\text{-}H_{2n}$: for example, $[AH_{2n}]/[A]>20$ for the $H_2$ storage step and conversely $[A\text{-}H_{2n}]/[A]<0.05$ for the reverse reaction. Given $\Delta H$ and $\Delta S$ information for pi-conjugated systems, it should therefore be possible to select a suitable hydrogenation substrate and design an $H_2$ storage and delivery process. Unfortunately, such data is only available for very few systems, i.e., benzene, naphthalene, pyridine, pyrrole, and the corresponding perhydrogenated molecules (cf. Tables 1a and 1 b). We have noticed from an analysis of the available data (and confirmed by subsequent calculations) that for the hydrogenation of aromatic substrates, $\Delta S$ which is largely representative of the loss of the translational entropy of the hydrogen molecule, is close to -30 cal/deg. mole of $H_2$. The enthalpy change, $\Delta H$ (expressed as kcal/mol $H_2$) in Equation 1, is therefore the quantity that mostly determines for pi-conjugated substrates the reversibility of this chemistry at specified hydrogenation and dehydrogenation process parameters. Since $\Delta H$ varies only slightly with temperature, $\Delta H°$, the enthalpy change for the reaction with all components at their standard state (1 atm., 25°C), is employed here as a first-order indication of the

reversibility and hence the usefulness of a given hydrogenation/dehydrogenation reaction system for $H_2$ storage and delivery.

In one embodiment, the invention relates to a practical hydrogen storage device that operates via a reversible hydrogenation of a pi-conjugated system for which the change in enthalpy at standard conditions (referred to hereinafter as $\Delta H^o_{H2}$, standard conditions being 25°C and 1 atm.) of hydrogenation of the substrate is less than -15.0 kcal/mol $H_2$, (a range of hydrogenation enthalpy changes that does not encompass the $\Delta H^o_{H2}$ for benzene or the $\Delta H^o_{H2}$ for naphthalene to their corresponding hydrocarbons). Substrates having a lower modulus (absolute value) of the negative standard enthalpy change of hydrogenation, will be the more easily dehydrogenated. The modulus of $\Delta H^o_{H2}$ is designated henceforth as $|\Delta H^o_{H2}|$. Substrates with $|\Delta H^o_{H2}|$ -15.0 kcal/mol $H_2$ will be the more easily dehydrogenated

In another embodiment, the invention relates to a practical hydrogen storage device that operates via a reversible hydrogenation of a pi-conjugated system, the change in enthalpy at standard conditions of hydrogenation of the substrate as determined experimentally is within the range of -7.0 to -20.0 kcal/mol $H_2$.

The hydrogenation of the pi-conjugated substrate molecule may in some cases yield more than one product of the same overall chemical composition. There may be found structural isomers or conformers of the product molecule that differ only in the relative disposition of its carbon-hydrogen bonds or of other atoms or groups of atoms in the molecule. The conformers will each have different energies (standard heats of formation, $\Delta H^\circ_f$), the thermodynamically most stable conformer having the lowest $\Delta H^\circ_f$. This occurs in the hydrogenation of naphthalene, which can result in the formation of the two conformers, both saturated molecules, cis- decalin and *trans*-decalin, which as illustrated by Fig. 2, differ in the relative disposition of the two C-H linkages, along the common carbon-carbon bond. Commercial decalin contains a 67:33 distribution of *cis* and *trans* conformers, the latter where the C-H bonds are on opposite sides of the common C-C linkage, is more stable by *ca.* 3 kcal/mol. Larger, fully hydrogenated pi-conjugated molecules and particularly those containing nitrogen heteroatoms can potentially have a myriad of conformers which may differ in energy ($\Delta H^\circ$) by several kcal/mol vis-a-vis the most stable conformer. In practice, the formation of conformers will depend on the conditions at which the catalytic hydrogenation of the pi-conjugated substrate is carried out; lower hydrogenation reaction temperatures favoring the least stable conformer molecules. As is clear from the illustration for naphthalene in (Fig. 2), the formation of such non-equilibrium conformers provides a means of desirably lowering the hydrogenation enthalpy $\Delta H^o_{H2}$ of the pi-conjugated unsaturated molecule, by now making its hydrogenation product less stable, thus enabling the dehydrogenation process to occur at a lower temperature. There may also be in some cases, depending on the catalytic dehydrogenation mechanism, the additional advantage of a kinetically more facile dehydrogenation of the more energetic non-equilibrium conformers.

### 5.1.1 THERMODYNAMIC CALCULATIONS

A difficulty in defining suitable pi-conjugated substrates for hydrogen storage is that experimentally derived hydrogenation enthalpy change data is available only for relatively small pi-conjugated molecules. Our basis for defining the following classes of extended pi-conjugated substrates suitable for the reversible hydrogenation/dehydrogenation processes of our invention is in terms of their enthalpy of hydrogenation as derived from quantum mechanical (QM) calculations. The calculations were done at two levels of theory: 1) Using the PM3 (Parametric Method 3) semi-empirical QM algorithm for a prediction of $\Delta H^\circ$ for the hydrogenation reaction expressed by Equation 1; and 2) employing an *ab initio* ("from the beginning") QM algorithm that utilizes density functional theory (DFT) which allowed a prediction of both $\Delta H$ and $\Delta S$ for the hydrogenation reaction at any temperature without input of experimental data. For a review of these computational techniques, see "Computational Chemistry - A Practical Guide for Applying Techniques to Real World Problems" by D. Young, Wiley - Interscience, NY, 2001

#### 5.1.1.1 THERMODYNAMIC CALCULATIONS CARRIED OUT USING THE SEMI-EMPIRICAL PM3 ALGORITHM

The PM3 method was implemented using the commercial software program package Spartan 02 and Spartan 04 by Wavefunction Inc., Irvine, CA. In performing the calculations, all structures were first fully optimized in their molecular geometry by an energy minimization procedure. The conformation of the hydrogenated species was carefully chosen so that the adjacent hydrogen atoms are present alternatively at opposite sides of the aromatic planes; the ultimate criteria being a selection of the conformer of lowest energy. It is known that PM3 incorrectly yields the heat of formation for the $H_2$ molecule. However, by replacing it with the experimental value of the heat of formation for $H_2$ at its standard state, we obtain the value of heat of reaction at standard conditions, $\Delta H^\circ$, for hydrogenation that is in fair agreement with the available experimental data. For example, for hydrogenation of benzene (gas) to cyclohexane (gas), the calcu-

lated value of $\Delta H°$ is -18.16 kcal/mol $H_2$ (exp. -16.42 kcal/mol $H_2$); for hydrogenation of naphthalene (gas) to trans-decalin (gas), the calculated value is -17.03 kcal/mol $H_2$ (exp. -15.96 kcal/mol $H_2$). While a similar level of accuracy was also found for other all carbon-hydrogen only aromatic compounds, the technique appears to be somewhat less satisfactory when applied to compounds with nitrogen or other hetero atoms for which the *ab initio* DFT method is much more reliable (see below). Nevertheless, PM3 works satisfactorily for providing the correct trend of $\Delta H°_f$ values over a range of similar molecules. And it is the only method available for very large systems (seven, five or six-membered rings) where the computational cost for the more sophisticated and higher precision *ab initio* methods would be impractical. Therefore we have only used the PM3 method for calculating $\Delta H°$ of hydrogenation for the series of polyaromatic hydrocarbons (Figs. 6 and 7) which comprise relatively larger molecules (greater than seven five- or six-membered rings) for which the computational cost of the *ab initio* DFT methodology would be prohibitive.

**5.1.1.2 <u>THERMODYNAMIC CALCULATIONS CARRIED OUT USING THE *AB INITIO* DENSITY FUNCTIONAL THEORY COMPUTATIONAL APPROACH</u>**

In the *ab initio* DFT computational approach, the molecular geometry is as before carefully selected to ensure that the lowest energy conformer has been chosen. The final geometry optimization is carried out using the B3LYP functional with a 6-311G** or higher basis set (see Chapter 5 and 10, respectively in the above "Computational Chemistry" reference). This calculation also provides the electronic energy, E of the molecule. The molecule's normal vibrational frequencies are estimated using the harmonic oscillator approximation, derived from the second derivative of the energy. The frequencies are a measure of the vibrational energy of the molecule from which using standard methods of statistical mechanics, treating the molecule as an ideal gas, the total vibrational enthalpy, Hv and entropy, Sv are determined as a function of temperature. Rotational and translational contributions to the enthalpy ($H_R$, $H_T$) and entropy ($S_R$, $S_T$) and the external energy of the molecule (RT where R is the gas constant) are also included. In summary, the enthalpy change, $\Delta H$ for the hydrogenation of substrate A to A-$H_{2n}$ (Equation 1) is given by:

$$\Delta H = \Delta E + sHv(A\text{-}H_{2n}) - sHv(A) - [Hv(H_2)+H_R(H_2)+H_T(H_2)+RT]\text{-------}(4)$$

The harmonic oscillator approximation is known to result in an over-estimate of the vibrational frequencies and thus the vibrational enthalpy, $H_v$. This situation is commonly remedied (see "Computational Chemistry Chapter 11") by modifying the calculated $H_v$'s for the organic molecules by the scaling factor s, which for a hydrogenation of aromatic molecules we have empirically determined as 0.8. This as described *ab initio* computational method provides hydrogenation enthalpies, $\Delta H°$ which agree well (within + 1 kcal/mol $H_2$) with available experimental data (cf. Table 1data for benzene (1), naphthalene ($2_{cis}$, $3_{trans}$), etc.). The entropy change for hydrogenation, $\Delta S$ is given by:

$$\Delta S = S(A\text{-}H_{2n}) - S(H_v) - [S_v(H_2)+S_R(H_2)+S_T(H_2)]\text{---------}(5)$$

In practice, for the hydrogenation of pi-unsaturated compounds the translational entropy for hydrogen, $S_T(H_2)$, largely predominates and as assumed earlier, $\Delta S_{H2}$ at standard condition for many systems is close to -30 cal/deg. mol. The thus estimated values of $\Delta H$ and $\Delta S$ along with Equations 2 and 3 were used to estimate the temperature at which 95.24% of the hydrogenated carrier, A-$H_{2n}$ would be converted back to the pi-unsaturated substrate, A, at 1 atm. of $H_2$, i.e., where K= [A-$H_{2n}$]/[A] (Equation 3) at reaction equilibrium at this temperature and $H_2$ pressure is equal to 0.05 atm:$^{-n}$. The corresponding temperatures for selected carriers were estimated from published experimental data (where available, e.g., the NIST Standard Reference Database No. 69 (March 2003)) using the HSC5 Chemistry for Windows software program package (Outokumpu Research, Finland). The thus calculated dehydrogenation temperature results using (a) the specific above described *ab initio* DFT method and (b) experimental data (where available, including the NIST database) is collected in Fig. 5 for a number of pi-conjugated substrates.

Experimentally determined values for the hydrogenation enthalpies can be obtained from measuring the heat of combustion of hydrogenated and dehydrogenated substrates to products of known thermodynamic properties (i.e., $CO_2$, $H_2O$, NO, or $N_2$) using known in the art or methods as described in Example 13 of the present application.

For the purposes of this description and the claims, "extended pi-conjugated substrates" are defined to include extended polycyclic aromatic hydrocarbons, and selected fractions of coal tar or pitch that have as major components the above classes of pi-conjugated substrates, or any combination of two or more of the foregoing. These classes are further defined below, and embodiments of species falling within these classes are provided.

In one embodiment, the modulus of the standard enthalpy change of hydrogenation of the extended pi-conjugated substrate, $|\Delta H^o_{H2}|$, to their corresponding saturated counterparts (e.g., the at least partially hydrogenated

extended pi-conjugated substrates) is less than 15.0 kcal/mol $H_2$ as determined experimentally (e.g., by combustion methods described above) or by the above-described *ab initio* DFT method. Accordingly, such molecules would therefore be suitable as reversible hydrogenation substrates for storing hydrogen according to this invention.

The $\Delta H^o_{H2}$ reaction enthalpies in Fig. 3, Tables 1a-1d and the dehydrogenation temperature data (Fig. 5) provide an instructive and useful classification of pi-conjugated substrates in terms of their suitability for hydrogen storage. Referring to the "Exp." column of data in Fig. 3, for the substrates/reaction systems 1, 2, 3, and 5 (respectively; benzene/cyclohexane; naphthalene/*cis*-decalin; naphthalene to *trans*-decalin and pyridine to pyrimidine) the modulus of $\Delta H^o_{H2}$ is greater than 15 kcal/mole, at least for the first three of these systems which have been touted in the prior art for $H_2$ storage. The molecules **(1, 2, 3,** and **5)** also fit under this classification on the basis of $\Delta H^o_{H2}$ data as calculated by *ab initio* DFT method, for which the agreement (within 1 kcal/mol $H_2$) with the experimentally derived data is excellent.

With confidence in the precision of *ab initio* DFT method we claim the use of pi-unsaturated substrates of this invention for which the modulus of $\Delta H^o_{H2}$ is less than 15 kcal/mol $H_2$. Referring now to Fig. 5: On the basis of both experimental and *ab initio* DFT method calculations, the hydrogenated forms of molecules 1 to 5 are expected to be at equilibrium, ca. 95% in the dehydrogenated form at above 240°C, which is indicated by the horizontal dotted line at 1 atm. $H_2$ pressure. The fully hydrogenated reaction systems of this invention as exemplified in Fig. 5 by pi-conjugated substrates 6 to 19 are expected to undergo a *ca.* 95% dehydrogenation under 1 atm. $H_2$ at temperatures below 250°C. Surprisingly, some of these molecules are predicted to de-hydrogenate even below 100°C (this would also require appropriately reactive catalysts).

In another embodiment, we claim the use of pi-unsaturated substrates of this invention for which the modulus of $\Delta H^o_{H2}$ is less than 20 kcal/mol $H_2$.

While the extended pi-conjugated substrates useful for reversible hydrogenation in accordance with this invention are represented as the unhydrogenated form of the substrate molecule, the actual substrate subjected to hydrogenation may already have some degree of hydrogenation. For purposes of the hydrogenation/dehydrogenation cycle to store and release hydrogen and to re-hydrogenate the substrate, the extended pi-conjugated substrate may exist and be cycled between different levels of full or partial hydrogenation and dehydrogenation as to either the individual molecules or as to the bulk of the substrate, depending upon the degree of conversion of the hydrogenation and dehydrogenation reactions. The levels of hydrogenation and dehydrogenation of the starting extended pi-conjugated substrate and the at least partially hydrogenated extended pi-conjugated substrate will be selected to provide the requisite level of hydrogen storage and release under practical operating conditions and requirements. The substrates useful according to this invention may also have various ring substituents, such as -n-alkyl, -branched-chain alkyl, -alkoxy, -nitrile, - ether and -polyether, which may improve some properties such as melting temperature of the substrate while at the same time not adversely interfering with the hydrogenation/dehydrogenation equilibrium but due to the increased weight resulting in some loss of $H_2$ storage capacity of the substrate. Preferably, any of such substituent groups would have 12 or less carbons. As discussed below
alkyl substituents (and it's expected that also alkoxy substituents) will actually favorably slightly lower the modulus of the heat of hydrogenation, $\Delta H^o_{H2}$ •

### 5.1.2 EXTENDED PI-CONJUGATED SUBSTRATES

Classes of extended pi-conjugated substrates suitable for the processes of this invention are further and more specifically defined as follows:

**Extended Polycyclic Aromatic Hydrocarbons (EPAH).** For the purposes of this description and the claims, "extended polycyclic aromatic hydrocarbons" are defined to be those molecules having either (1) a polycyclic aromatic hydrocarbon comprising a fused ring system having at least four rings wherein all rings of the fused ring system are represented as 6-membered aromatic sextet structures; or (2) a polycyclic aromatic hydrocarbon of more than two rings comprising a six-membered aromatic sextet ring fused with a 5-membered ring.

The EPAH molecules represent a particular class of extended pi-conjugated substrates since their pi electrons are largely delocalized over the molecule. While, on a thermodynamic basis, generally preferred are the larger molecules (i.e., those with considerably more than four rings), the value of the standard enthalpy change of hydrogenation, $\Delta H^o_{H2}$, and thus the ease of reversible hydrogenation can be very dependent on the "external" shape or structure of the EPAH molecule. Fundamentally, the EPAH molecules that have the highest aromatic resonance stabilization energy will have the lowest modulus (absolute value) of the standard enthalpy of hydrogenation, $\Delta H^o_{H2}$. As is taught by E. Clar in

"Polycyclic Hydrocarbons" Academic Press, 1984, Chapter 6, it is a general principle that the stability of isomers of fused ring substrates increases with the number of aromatic sextets. For instance anthracene

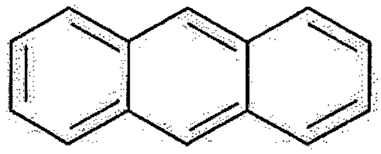

has one aromatic sextet (conventionally represented by three alternating single and double bonds in a single ring or by an internal circle), as for benzene, while phenanthrene,

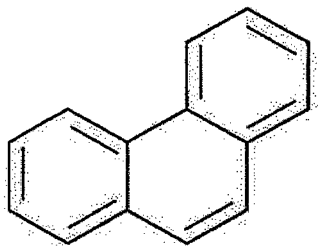

has two aromatic sextets, with the result that phenanthrene is more stable by 4.4 kcal/mol (based on the molecules' relative heats of formation).

Thus, according to this invention, for a EPAH of a given number of fused rings the structural isomer that is represented with the largest number of aromatic sextets will be preferred as a hydrogenation/dehydrogenation extended pi-conjugated substrate. EPAH's with a large number of aromatic sextets are preferred structures in accordance with this invention. These two criteria provide a useful but only qualitative indication of the relative $\Delta H^{o}_{H2}$ of hydrogenation of a series of EPAH isomers and EPAH molecules of varying size.

Quantum mechanics calculations utilizing the PM3 methodology provide a more useful and quantitative *but only approximate* prediction of the $\Delta H^{o}_{H2}$ values for hydrogenation as summarized in Fig. 6 for the represented molecules.

In Fig. 6, Curve I shows the variation of $\Delta H^{o}_{H2}$ of hydrogenation for a series of linear polyacenes for which the first three members are benzene, naphthalene, and anthracene. The heat, or enthalpy, of hydrogenation reaches its least negative value (smallest more favorably $|\Delta H^{o}_{H2}|$) at naphthalene (2 rings) and becomes increasingly more negative with an increasing number of aromatic rings. We have discovered that fusing the aromatic rings in a staggered ("armchair") linear arrangement results in a less negative $\Delta H^{o}_{H2}$ of hydrogenation as the number of rings increases (Fig. 6, Curve II). We have observed a more pronounced effect of fused ring number on $\Delta H^{o}_{H2}$ of hydrogenation for a series of roughly circular polyaromatic hydrocarbons (Fig. 6, Curve III). Increasing the number of fused rings from pyrene (4 rings) to coronene (7 rings) results in a decrease of 1.72 kcal/mol $H_2$ in the modulus of the ΔH° of hydrogenation. This curve portraying larger and still larger polyaromatic hydrocarbons suggests that the ΔH° of hydrogenation of a single sheet of graphite will be of the order of about -8 to about -11 kcal/mol $H_2$ and represents the ultimate in large molecular size (if not the ideal) potentially reversibly hydrogenable polyaromatic hydrocarbons. The large effect of polyaromatic hydrocarbon shape on the ΔH° of hydrogenation can also be illustrated by comparing the ΔH° of hydrogenation values for the three 13-ring polyaromatic hydrocarbons in Fig. 6. There is a span of over 5.5 kcal/mol $H_2$ between the (PM3 derived) ΔH° of hydrogenation of hexabenzocoronene ($C_{42}H_{18}$,-12.9 kcal/mol $H_2$):

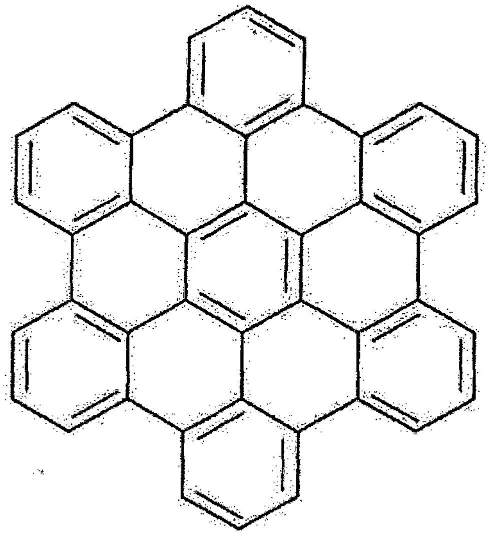

and the also 13-ring linear polyacene of curve I of Fig. 6 for which the (PM3) $\Delta H°$ of hydrogenation is -18.4 kcal/mol $H_2$.

Other examples for polycyclic aromatic hydrocarbons particularly useful according this invention include pyrene, perylene, coronene, ovalene, picene and rubicene.

As noted above, EPAH's comprising 5-membered rings are defined to be those molecules comprising a six-membered aromatic sextet ring fused with a 5-membered ring. We have also discovered that, surprisingly, these pi-conjugated substrates comprising 5-membered rings would provide effective reversible hydrogen storage substrates according to this invention since they have a lower modulus of the $\Delta H°$ of hydrogenation than the corresponding conjugated system in a 6-membered ring. The calculated (PM3) $\Delta H°$ for hydrogenation of three linear, fused 6-membered rings (anthracene) is -17.1 kcal/mol $H_2$. Replacing the center 6-membered ring with a 5-membered ring gives a molecule (fluorene, $C_{13}H_{10}$)

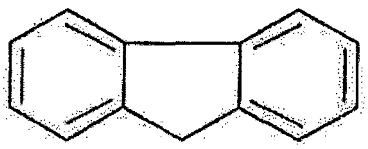

that has a (PM3) calculated standard enthalpy, $\Delta H°$, of hydrogenation of-15.4 kcal/mol $H_2$. The corresponding values of this $\Delta H^{o}_{H2}$ as determined by the more precise *ab initio* DFT method are -15.8 kcal/mol $H_2$ for anthracene and -14.4 kcal/mol $H_2$ for fluorene. Examples of fused ring structures having a five-membered ring include fluorene, indene and acenanaphthylene.

For the purposes of this description and the claims, extended polycyclic aromatic hydrocarbons also include structures wherein at least one of such carbon ring structures comprises a ketone group in the ring structure and the ring structure with the ketone group is fused to at least one carbon ring structure which is represented as an aromatic sextet.

There are prior art teachings on hydrogen storage utilizing the reversible catalytic hydrogenation of simple ketones, e.g., acetone [DE 100557MA1 (2002)] to the corresponding alcohols, for which the hydrogen storage capacities are relatively low. However, we have discovered that by introducing the hydrogenable ketone substituents into polyaromatic substrates with which it is conjugated, acceptable heats and hydrogen storage capacities are achievable. Thus for the pigment pyranthrone,

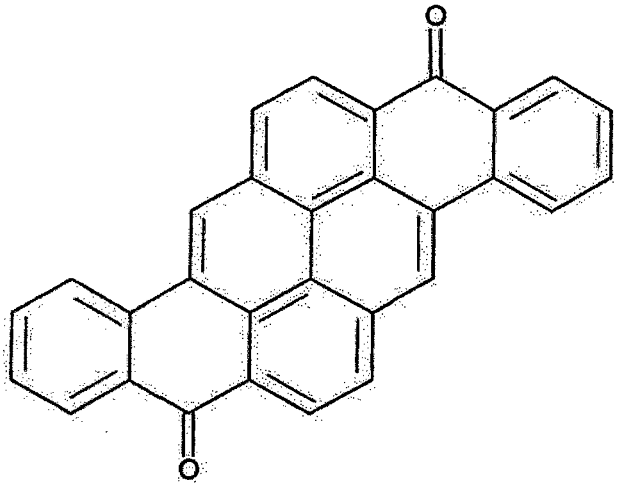

the standard enthalpy of hydrogenation is calculated by the PM3 method to be -14.4 kcal/mol $H_2$.

Extended polycyclic aromatic hydrocarbons are available from Aldrich Chemical Company, Milwaukee, WI; Lancaster Synthesis, Windham, NH; and Acros Organics, Pittsburgh, PA; or can be prepared by known methods (see E. Clar, "Polycyclic Hydrocarbons", Academic Press, New York, 1964, Chapter 19).

Generally, the substitution of alkyl groups for hydrogen atoms on the ring results in a slight lowering of $\Delta H^o_{H2}$. The greatest reduction in the hydrogenation enthalpy however, is seen with amino, $-NH_2$, alkylamino, -NHR, or dialkyl amino , $-NHR_2$, substituents which act as overall electron donating groups to the pi-conjugated monocyclic compound, thus effectively extending its pi-conjugation. An illustration is provided by 1, 4-bis(methylamino)benzene for which $\Delta H^o_{H2}$ is -13.5 kcal/mol $H_2$, as compared to -16.42 kcal/mol $H_2$ for benzene. However, while substitution of hydrogen for other groups may result in a more favorable $\Delta H^o_{H2}$ and more desirable physical properties of the hydrogen carrier, there will be a penalty in terms of gravimetric storage capacity and the substituents should be of minimal molecular weight consistent with performance.

Table 1a provides illustrative examples of extended pi-conjugated substrates and their corresponding enthalpies of hydrogenation at 300 K as calculated using the *ab initio* DFT method described above, $\Delta H^o_{H2}$ (300 K) (cal.), and as determined experimentally, $\Delta H^o_{H2}$ (298 K) (exp.). Table 1a also provide for selected systems the predicted temperature ($T_{95\%}$) atm at which 95.24% (nominally 95%) of the fully hydrogenated carrier will be converted back to the pi-unsaturated substrate, ($[A\text{-}H_{2n}]:[A] = 0.05:1$) at 1 atm $H_2$, as calculated using the *ab initio* method described above, and as calculated from experimentally derived data (exp.).

Table 1a. Extended polycyclic aromatic hydrocarbons and comparative data for benzene (1), naphthalene (2, 3), anthracene (46) and phenanthrene (47).

| Substrate Number | Substrate Structure | $\Delta H^o_{H2}$ (300 K) (cal.) | $\Delta H^o_{H2}$ (298 K) (exp.) | $T_{95\%}$ °C (cal.) | $T_{95\%}$ °C (exp.) |
|---|---|---|---|---|---|
| **1** | 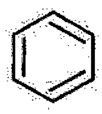 | -15.6 | -16.42 | 319 | 318 |
| **2**[a] | 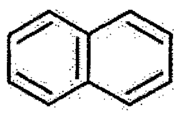 cis | -15.1 | -15.29 | 244 | 262 |

(continued)

| Substrate Number | Substrate Structure | $\Delta H^{o}_{H2}$ (300 K) (cal.) | $\Delta H^{o}_{H2}$ (298 K) (exp.) | $T_{95\%}$ °C (cal.) | $T_{95\%}$ °C (exp.) |
|---|---|---|---|---|---|
| 3[b] | 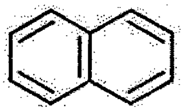 trans | -15.8 | -15.91 | 273 | 280 |
| 6 | 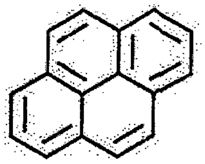 | -14.6 | | 226 | |
| 7 | 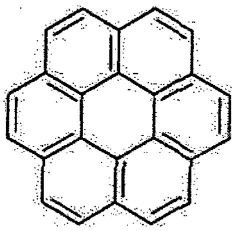 | -13.0 | | 169 | |
| 22 | 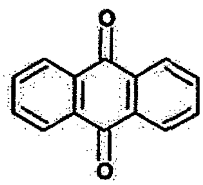 | -13.9 | | 206 | |
| 26 | 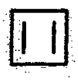 | -52.2 | | | |
| 27 | 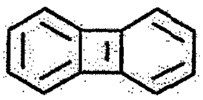 | -17.9 | | 333 | |
| 28 | 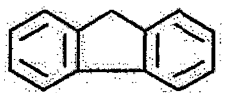 | -14.4 | | 223 | |
| 31 | 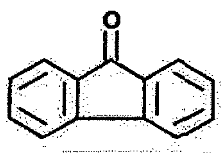 | -14.1 | | 216 | |
| 34 | 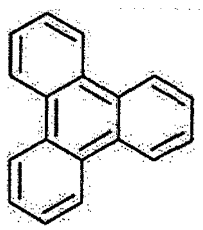 | -14.2 | | 216 | |
| 46 | 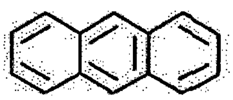 | -15.8 | | 271 | |

(continued)

| Substrate Number | Substrate Structure | $\Delta H^{o}_{H2}$ (300 K) (cal.) | $\Delta H^{o}_{H2}$ (298 K) (exp.) | $T_{95\%}$ °C (cal.) | $T_{95\%}$ °C (exp.) |
|---|---|---|---|---|---|
| **47** | 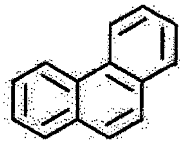 | -14.8 | | 237 | |

[a] Heat of hydrogenation to form *cis*-decalin.
[b] Heat of hydrogenation to form *trans*-decalin.

5.1.3 **USE OF THE EXTENDED PI-CONJUGATED SUBSTRATES AS REVERSIBLE HYDROGEN CARRIERS**

In certain embodiments, the extended pi-conjugated substrates identified above will for the most part be solids in their relatively pure state at ambient conditions. From Examples 1-7 it is clear that in admixtures with suitable catalysts it is possible, though admittedly surprising, to conduct the hydrogenation and dehydrogenation chemistry well below the melting point of the substrate, and in most of these examples, also well below the melt temperature of hydrogenated substrate.

But it may be preferable under some circumstances to use extended pl-conjugated substrates that are liquid, at least at the hydrogenation and dehydrogenation reaction conditions, that is, the substrates remain in a continuous liquid phase while in contact with the catalyst. In the latter case, the hydrogen storage and release chemistry can be conducted in conventional stirred tank reactors in which mechanical mixing ensures that there is a good mass transfer between the substrate molecules, the dispersed (or dissolved) catalyst, and hydrogen, with minimal mass transfer limitations ensuring rapid kinetics. Alternatively, the hydrogenation or the dehydrogenation could be conducted in a flow-through reactor (see Example 12). A liquid phase hydrogenated substrate could be used to safely and economically transport the gas as the hydrogenated pi-conjugated molecule from a large hydrogen plant, where there is the economy of scale, to distribution and use centers where the hydrogen is catalytically liberated from the liquid carrier at mild conditions for use in fuel cells or other devices. Preferably, the substrates, either in their hydrogenated or dehydrogenated states, should have a melting point of lower than -10°C in order to be transferable in cold weather conditions, and should have a melting point of lower than 100°C if they are to be transported or transferred with supplemental heating. Generally, the substrates will be considered for purposes of this invention to be liquid, and thereby transferable, if they have a viscosity of less than 2000 cSt (centistokes).

One way to render an extended pi-conjugated substrate as a liquid is to utilize mixtures of two or more components, one or more of which comprises an extended pi-conjugated substrate. In some cases, mixtures may form a eutectic mixture. For instance chrysene (1,2-benzophenanthrene, m.p. 250°C) and phenanthrene, (m.p. 99°C) are reported to form a eutectic melting at 95.5°C and for the 3-component system consisting of chrysene, anthracene and carbazole (m.p. 243°C), a eutectic is observed at 192°C. (Pascal, Bull.Soc.Chim.Fr. 1921, 648). The introduction of n-alkyl, alkyl, alkoxy, ether or polyether groups as substituents on the ring structures of the polycyclic aromatic molecules, particularly the use of substituents of varying chain lengths up to about 12 carbon atoms, can lower their melting points, but at some cost in "dead weight" and reduced sorbed hydrogen capacity of the systems. Certain substituents, e.g., nitriles and alkynes, can provide additional sorbed hydrogen capacity since each nitrile group can accommodate two molar equivalents of hydrogen.

With the growing importance of vehicular fuel cells, and especially polymer electrolyte membrane fuel cells, where operating temperatures are below 200°C and therefore easily available heat Is also below this temperature, the ability to hydrogenate a substrate having a normal melting point above 200°C while present in a mixture having a freezing point of less than 200°C would be advantageous, especially where the lowered freezing point mixture was predominantly of two or more of the extended pi-conjugated substrates to provide the maximum reversibility of the hydrogenation/dehydrogenation and highest hydrogen storage capacity. The extended pi-conjugated substrates and mixtures as described above provide such advantages.

As taught by J. C. Fetzer in "Large (C>=24) Polycyclic Aromatic Hydrocarbons" pp. 206-212, coal tar and pitch materials are highly complex mixtures that contain a very large proportion of extended polycyclic aromatics. As used herein and in the claims, the term "pitch" will be used to include the complex mixtures often referred to as "tars". The complexity and variety of the polycyclic aromatic components, including alkyl substituted EPAH's in the pitch, presumably results in the observed liquidity. While appropriately selected coal or petroleum-derived pitch compositions could be employed, more preferable "cleaner" (i.e., sulfur free) synthetic pitch substrates may be utilized. As described by I.

Mochida et al, Carbon 38, 2000, pp. 305-328, and Carbon 26, 1988, pp. 843-852, synthetic pitch consisting of mixtures of dimers to pentamers of naphthalene, anthracene, phenanthrene etc. can be prepared by an $HF/BF_3$ acid-catalyzed condensation, oligomerization of these polycyclic aromatic hydrocarbons. The prepared pitch compositions have softening points which range from 63°C to 114°C and even if it proves necessary to add a small amount of an additive (i.e. a low volatility hydrocarbon fluid or some of the hydrogenated liquid LPAH) to increase their fluidity, they represent a class of low volatility liquid LPAH substrates for a storage of hydrogen by their reversible catalytic hydrogenation in accordance with this invention. The term "pitch" also includes natural pitch and synthetic pitch. In one embodiment, the extended pi-conjugated substrate useful in the process of the invention is comprised in a pitch or pitch fraction selected from the group consisting of natural pitch, synthetic pitch, synthetic pitch containing molecules with nitrogen heteroatoms, and combinations thereof.

The process of storing hydrogen by a reversible hydrogenation of an extended pi-conjugated substrate in accordance with this invention comprises, in its most general form, the following sequence of steps:

a) contacting hydrogen, in the presence of a hydrogenation catalyst under hydrogenation conditions, with an extended pi-conjugated substrate to effect storage of hydrogen by forming an at least partially hydrogenated extended pi-conjugated substrate; and thereafter
b) contacting the at least partially hydrogenated extended pi-conjugated substrate under dehydrogenation conditions in the presence of an effective amount of a dehydrogenation catalyst to release hydrogen from the at least partially hydrogenated extended pi-conjugted substrate.

In another embodiment of this invention, the hydrogenation catalyst is removed from the at least partially hydrogenated extended pi-conjugated substrate obtained from step a) prior to conducting step b).

As described below in the examples, the hydrogenation and dehydrogenation can be carried out in a single vessel. Hydrogenation catalysts are also known to function as dehydrogenation catalysts and are described herein. Thus the substrate and catalyst, which functions both as hydrogenation catalyst and dehydrogenation catalyst, can be contained in a single vessel and the hydrogenation and dehydrogenation sequentially carried out in the same vessel under appropriate temperature and hydrogen partial pressures.

In another embodiment, the at least partially hydrogenated extended pi-conjugated substrate can be removed from the vessel in which it is hydrogenated and dehydrogenated in another vessel. This is especially preferred where the extended pi-conjugated substrate and the hydrogenated substrate are in a liquid form and so can be transferred and transported as a liquid. Where the hydrogenated and dehydrogenated substrates have a melting point above -10°C, they can be transported as a liquid in most weather conditions without supplemental heat to keep them liquid. Even if the melting point is up to 100°C, the substrates can still be transferred and utilized as liquids with low level heating.

In one embodiment, the invention relates to a process for the storage of hydrogen comprising contacting hydrogen gas with a solid extended pi-conjugated substrate in the presence of an effective amount of a hydrogenation catalyst under hydrogenation conditions to at least partially hydrogenate the extended pi-conjugated substrate.

In another embodiment, the invention relates to a process for the storage of hydrogen comprising contacting hydrogen gas at a hydrogen partial pressure greater than 6.7 bar and at a temperature of between 50°C and 300°C with a solid extended pi-conjugated substrate in the presence of an effective amount of a hydrogenation catalyst to at least partially hydrogenate the extended pi-conjugated substrate.

In order to efficiently contact the hydrogen in the presence of the hydrogenation catalyst with the extended pi-conjugated substrate, which in many cases of the substrates of this invention are relatively involatile solids or liquids at the reaction conditions, it is generally preferred to prepare an intimate physical mixture of the substrate with a hydrogenation catalyst. The substrate, which may be a solid or a liquid, should preferably be sufficiently involatile at least at ambient temperatures and preferably also at the higher temperature reaction conditions so as to preclude the need for its bulk separation or the separation of any of the reaction products or intermediates from the gaseous hydrogen product. It may be necessary however, as a precautionary step in some cases to provide a trap containing an absorbent, which can scavenge and thus remove any trace level volatile containments from the released hydrogen.

Some of the specified suitable substrates, owing to their relatively large molecular size (e.g., three or more five or six-atom rings), will naturally be solids at the preferred reaction temperatures below 250°C. But as noted above physical (including eutectic) mixtures of a number of these substrates may be liquids, at least at reaction temperatures, which may be advantageous for providing an adequate mixing of the catalyst and reaction components. In such a mixture one of the components may be regarded as being both a solvent and a hydrogenation substrate. As also described above, natural and synthetic pitch materials which consist of a liquid mixture of many extended polycyclic aromatic hydrocarbons are seen as suitable substrates.

In one embodiment, the invention relates to a process for the storage and subsequent release of hydrogen comprising:

a) contacting hydrogen, in the presence of a hydrogenation catalyst under hydrogenation conditions, with an extended pi-conjugated substrate to effect storage of hydrogen by forming an at least partially hydrogenated extended pi-conjugated substrate; and thereafter
b) contacting the at least partially hydrogenated extended pi-conjugated substrate under dehydrogenation conditions in the presence of an effective amount of a dehydrogenation catalyst to release hydrogen from the at least partially hydrogenated extended pi-conjugted substrate; wherein

the extended pi-conjugated substrate and the at least partially hydrogenated extended pi-conjugated substrate are liquids at the dehydrogenation conditions of step b).

The hydrogenation catalysts, which are generally known and which will generally also function as dehydrogenation catalysts for purposes of this invention, will comprise finely divided metals, and their oxides and hydrides, of Groups 4, 5, 6 and 8, 9, 10 of the Periodic Table according to the International Union of Pure and Applied Chemistry. Preferred are titanium, zirconium of Group 4; tantalum and niobium of Group 5; molybdenum and tungsten of Group 6; iron, ruthenium of Group 8; cobalt, rhodium and iridium of Group 9; and nickel, palladium and platinum of Group 10 of the Periodic Table according to the International Union of Pure and Applied Chemistry. Of these the most preferred being zirconium, tantalum, rhodium, palladium and platinum, or their oxide precursors such as $PtO_2$. These metals may be used as catalysts and catalyst precursors as metals, oxides and hydrides in their finely divided form, as very fine powders or as skeletal structures such as platinum black or Raney nickel, or well-dispersed on carbon, alumina, silica, zirconia or other medium or high surface area supports, preferably on carbon or alumina. Acidic supports, in combination with transition metal dehydrogenation catalysts, or in some cases, the acidic support alone, may be preferable for dehydrogenation catalysts. Examples of acidic supports are silica-alumina, gamma-alumina, zeolites in the proton-exchanged form, sulfonated zirconia, and solid perfluorinated polymeric sulfonic acids. In some cases the dehydrogenation may be catalyzed by solid state Brönsted or Lewis acids in the absence of transition metals. The above listed supports are, for the most part, of the Brönsted or protonic acid types. Suitable Lewis acid catalysts include aluminum trifluoride, aluminum chlorofluorides, zinc chloride, aluminum chloride, tin chloride, copper trifluoromethane sulfonate, scandium trichloride, and the hexafluoroacetylacetonate of complexes of lanthanum and the other members of the Lanthanide series of elements according to the Periodic Table according to the International Union of Pure and Applied Chemistry. Intermetallic hydrides such as $ZnNiH_{2.8}$ and $ZrCoH_{2.8}$ which have been used as either catalysts or catalyst precursors for a hydrogenolysis at very high temperatures (~500°C) of graphite (to $CH_4$) as described by P. V. Ryabchenko et al. in Khimiya Tverdogo Topliva 19, 129-134 (1985) may likewise be used.

**Reaction of the pi-unsaturated substrate and catalyst mixture with hydrogen.** Traditionally, the catalytic hydrogenation of pi-conjugated substrates (e.g., naphthalene, phenanthrene, pyrene, etc. which are solids at room temperature) is carried out with the compounds dissolved in an hydrogenation-inert solvent, containing a slurry of a heterogeneous catalyst. For example, these conditions are described in J. Org. Chem. 4, 2797 (1980), where ethyl acetate was used as the solvent and a 10% palladium on carbon catalyst was employed. Substrates which are liquid at reaction temperature can be hydrogenated in the presence of a contained slurry catalyst. In the case of both solution and liquid substrates a hydrogen overpressure is used and since hydrogen has a very low solubility in the liquid phase it is essential for realizing an adequate mass transfer to stir the mixture, apply an external rocking motion to the reactor or otherwise ensure intimate contact between the hydrogen gas and the substrate/catalyst interface such as by bubbling or sparging the hydrogen through the substrate/catalyst mixture or using the hydrogen to fluidize or ebullate the substrate/catalyst mixture.

In one embodiment of this invention, the extended pi-conjugated substrate, charged into the reactor as solid (together with the solid catalyst) is hydrogenated in the absence of any solvent. This is clearly illustrated by Examples 2-5 where the substrates, coronene and hexabenzocoronene, of melting point 442°C and 700+°C are solids even at the reaction temperatures of 140°C and 200°C respectively. This gas phase hydrogenation of a solid substrate provides for a new and novel gas/solid hydrogenation process.

In another embodiment, the novel gas/solid hydrogenation process can be described as comprising contacting hydrogen gas with a solid extended pi-conjugated substrate as defined in this description in the presence of an effective amount of a hydrogenation catalyst under hydrogenation conditions to at least partially hydrogenate the extended pi-conjugated substrate and more particularly, as a process for the storage of hydrogen comprising contacting hydrogen gas at a hydrogen partial pressure greater than 100 psia (6.7 bar) and at a temperature of between 50°C and 300°C with a solid extended pi-conjugated substrate as defined in this description in the presence of an effective amount of a hydrogenation catalyst to at least partially hydrogenate the extended pi-conjugated substrate.

For conducting the dehydrogenation step, the hydrogen gas overhead pressure, usually in the general range of 500-1000 psia, (34.5 bar to 69 bar) for the hydrogenation step, is dropped to about 1.5-50 psia (0.1-3.3 bar), which is generally a sufficient pressure for delivering hydrogen to a fuel cell, with the reactor still at temperature. The increase in hydrogen pressure in the system is monitored as a function of time.

Where possible the calculated total hydrogen uptake and release were confirmed by chemical analyses using

nuclear magnetic resonance (NMR) for soluble samples and otherwise by mass spectroscopy. For the relatively highly involatile larger pi-conjugated substrates, matrix-assisted laser desorption mass spectroscopy (MALDI) was found to be invaluable for this purpose.

Dehydrogenation processes suitable for use in the present invention are described in R.O. Loufty and E.M. Vekster, in "Investigation of Hydrogen Storage in Liquid Organic Hydrides", Proceedings of the International Hydrogen Energy Forum 2000, Munich Germany, 2000; pp. 335-340; U.S. Patent No. 6,074,447 to Jensen et al.*;* and Hodoshima et al., Int. J. Hydrogen Energy 28: 1255-1262 (2003). Dehydrogenation processes useful in the present invention include those carried out at from 200°C to 400°C under "wet-dry muitiphase conditions", which involves intermittently contacting the saturated liquid hydrocarbon with the heated solid catalyst in a way such that the catalyst is alternately wet and dry described by N. Kariya et al., Applied Catalysis A 233: 91-102 (2002) . A preferred dehydrogenation process is a continuous liquid phase process, where the process is carried out at a temperature below the boiling point of the hydrogenated pi-conjugated substrate and the pi-conjugated substrate as described in section 5.1.3. When used in connection with the dehydrogenation process, the phrase "at a temperature below the boiling point of the hydrogenated pi-conjugated substrate and pi-conjugated substrate" means that the process is carried at sufficient pressure to prevent the hydrogenated pi-conjugated substrate and the pi-conjugated substrate from boiling at the reaction temperature.

The following examples are set forth to assist in understanding the invention and do not limit the invention described and claimed herein.

## 6. <u>EXPERIMENTAL</u>

**Example 1:** Reversible Hydrogenation of Pyrene. A 0.2 g sample of pyrene (>99%, Fluka) and 0.1 g of rhodium on carbon catalyst (5% Rh, Acros Organics) were ground by hand with an agate mortar and pestle until a uniform color mixture was formed. The mixture was then placed in a 50cc high pressure reactor (Parr instruments) equipped with a customized grinding apparatus. The grinding apparatus consisted of an elongated stirrer shaft with an arc-shaped paddle. The bottom of the reactor contained a stainless steel insert with a concave bottom, which allowed the paddle of the stirrer shaft to sweep the bottom of the reactor with 1/8" clearance. Mechanical agitation of the sample mixture was carried out by adding 5-8 stainless steel ball bearings of varying size (1/16" - ¼" diameter). The stirrer motor was programmed such that rotational direction of the stirrer would alternate between clockwise and counterclockwise directions during the course of the reaction in order to ensure that all of the sample mixture would contact the grinding balls. Once the sample mixture and grinding balls were loaded into the reactor, the system was pressurized with helium to 1000 psia (69 bar) and vented. Pressurization and venting with helium was repeated three times. The reactor system was then twice pressurized to 1000 psia (69 bar) hydrogen and vented. Once purging was completed, the sample mixture was hydrogenated by grinding at 95°C and 1000 psia (69 bar) hydrogen for 1.5 hours. After the reaction time, the reactor was then quickly cooled to room temperature and vented. Half of the sample mixture was removed from the reactor (h-pyrene), and the remaining material was left in the reactor for dehydrogenation. The material to be dehydrogenated was purged as described above and ground at 95°C and 15 psia (1 bar) hydrogen for three hours before the reactor was cooled to room temperature. The sample was then removed for analysis (dh-pyrene). Both of the hydrogenated pyrene (h-pyrene) and dehydrogenated h-pyrene (dh-pyrene) samples are separated from the catalyst by extraction with chloroform (HPLC grade, Fisher) and filtering of the insoluble catalyst. The chloroform was then removed under vacuum to obtain the pure products. Gas chromatography-Mass spectroscopy (GC-MS) and proton nuclear magnetic resonance (NMR) spectroscopy analyses were carried out on the hydrogenated and dehydrogenated h-pyrene. GC-MS indicated that >99% of the pyrene starting material was converted to a mixture of hydrogenated products, having a gravimetric storage capacity for hydrogen of 2.3 wt.% on a total sample weight basis (pyrene + catalyst). Upon dehydrogenation, GC-MS showed that approximately 25% of the hydrogenated material in converted back to pyrene. Proton NMR was used to verify the hydrogenation/dehydrogenation of pyrene. Although the proton NMR spectra are too complex for peak assignment of individual hydrogenated pyrene products, integration of pyrene peak intensity versus new resonances in the spectrum indicated substantial conversion during hydrogenation and partial regeneration of pyrene after dehydrogenation. Tables 2 and 3 show the product distribution of h-pyrene and dh-pyrene calculated from GC-MS from areas normalized for those masses:

Table 2. Product distribution of h-pyrene calculated from GC-MS from areas normalized for those masses.

| h-Coronene Sample Components | Molecular Formula | Percentage of Sample Mixture |
|---|---|---|
| Pyrene | $C_{16}H_{10}$ | 0.5 |
| Dihydropyrene | $C_{16}H_{12}$ | 6.0 |
| Tetrahydropyrene | $C_{16}H_{14}$ | 30 |

(continued)

| h-Coronene Sample Components | Molecular Formula | Percentage of Sample Mixture |
|---|---|---|
| Hexahydropyrene | $C_{16}H_{16}$ | 25 |
| Decahydropyrene | $C_{16}H_{20}$ | 36 |
| Hexadecahydropyrene | $C_{16}H_{26}$ | 2.6 |

Table 3. Product distribution of dh-pyrene calculated from GC-MS from areas normalized for those masses.

| h-Coronene Sample Components | Molecular Formula | Percentage of Sample Mixture |
|---|---|---|
| Pyrene | $C_{16}H_{10}$ | 25 |
| Dihydropyrene | $C_{16}H_{12}$ | 14 |
| Tetrahydropyrene | $C_{16}H_{14}$ | 8 |
| Hexahydropyrene | $C_{16}H_{16}$ | 30 |
| Decahydropyrene | $C_{16}H_{20}$ | 23 |

Example 2: Reversible Hydrogenation of Coronene with 5% Rh on carbon catalyst and mechanical grinding. A 0.125 g sample of coronene (95%, Acros Organics) and 0.065 g of rhodium on carbon catalyst (5% Rh, Acros Organics) were ground by hand with an agate mortar and pestle until a uniform dark green mixture was formed. The mixture was then placed in a 50 cc high pressure reactor (Parr instruments) equipped with a customized grinding apparatus. The grinding apparatus consisted of an elongated stirrer shaft with an arc-shaped paddle. The bottom of the reactor contained a stainless steel insert with a concave bottom, which allowed the paddle of the stirrer shaft to sweep the bottom of the reactor with 1/8" clearance. Mechanical agitation of the sample mixture was carried out by adding 5-8 stainless steel ball bearings of varying size (1/16" - ¼" diameter). The stirrer motor was programmed such that rotational direction of the stirrer would alternate between clockwise and counterclockwise directions during the course of the reaction in order to ensure that all of the sample mixture would contact the grinding balls. Once the sample mixture and grinding balls were loaded into the reactor, the system was pressurized with helium to 1000 psia (69 bar) and vented. Pressurization and venting with helium was repeated three times. The reactor system was then twice pressurized to 1000 psia (69 bar) hydrogen and vented. The coronene was hydrogenated by heating the sample mixture to 150°C under 1045 psia (72 bar) hydrogen while the mixture was continuously ground for four hours. The reactor was then quickly cooled to room temperature and vented to atmospheric pressure. The mixture was removed from the reactor, weighed, and half of the material was returned to the reactor for dehydrogenation. The hydrogenated coronene (h-coronene) was removed from the mixture by extracting with chloroform, filtering of the insoluble catalyst, and drying under vacuum. Dehydrogenation was carried out by continuous grinding at 150°C under 15 psia (1 bar) hydrogen for 16 hours. After cooling the reactor to room temperature, the sample mixture was removed from the reactor and the dehydrogenated h-coronene (dh-coronene) was isolated by extraction with chloroform, filtering of the insoluble catalyst, and drying under vacuum. Both of the h-coronene and dh-coronene samples were analyzed by proton NMR and DEP Probe CI (isobutane) mass spectrometry. The coronene parent ion (MW=300) was not present in the mass spectrum of the h-coronene. The mass spectrum mainly consisted of masses 318, 314 and 310. The mass spectrum of dh-coronene showed that the three masses at 310, 314, and 318 have decreased in intensity and a new peak was formed at 300 m/z, the molecular weight of coronene. Assuming that the response factors for each product were similar, a particular ion contribution to the spectrum and the weight increase of coronene upon hydrogenation was calculated. Upon hydrogenation coronene added 3.5 wt.% hydrogen and 80 percent of those hydrogenated products were converted back to coronene upon dehydrogenation. The irreversible hydrogenated product mainly consisted of the mass 318 isomer. Proton NMR spectroscopy was in good agreement with the mass spectroscopy results. The coronene resonance (singlet at 9 ppm) diminished significantly after hydrogenation while new upfield resonances, assigned to methylene hydrogens, appeared. The intensity of the coronene resonance was regained after dehydrogenation while the methylene resonances diminished. Tables 4-5 illustrate the relative abundance of each mass signal in the mass spectrum of h-coronene and dh-coronene:

Table 4. Results of a mass spectroscopy study showing the relative abundance of the mass signal corresponding to the h-coronene components formed during hydrogenation of coronene.

| h-Coronene Sample Components | Molecular Formula | Percentage of Sample Mixture |
|---|---|---|
| Coronene | $C_{24}H_{12}$ | <1 |
| Decahydrocoronene | $C_{24}H_{22}$ | 2 |
| Tetradecahydrocoronene | $C_{24}H_{26}$ | 27 |
| Octadecahydrocoronene | $C_{24}H_{30}$ | 70 |

Table 5. Results of a mass spectroscopy study showing the relative abundance of the mass signal corresponding to the dh-coronene components formed during dehydrogenation of h-coronene.

| dh-Coronene Sample Components | Molecular Formula | Percentage of Sample Mixture |
|---|---|---|
| Coronene | $C_{24}H_{12}$ | 92 |
| Octahydrocoronene | $C_{24}H_{20}$ | 0.82 |
| Tetradecahydrocoronene | $C_{24}H_{26}$ | 0.54 |
| Octadecahydrocoronene | $C_{24}H_{30}$ | 6.7 |

**Example 3:** Reversible Hydrogenation of Coronene with 5% Rh on carbon catalyst. A 0.066 g sample of coronene (95%, Acros Organics) and 0.033 g of rhodium on carbon catalyst (5% Rh, Acros Organics) were ground with an agate mortar and pestle for 15 minutes until a uniform dark green mixture was formed. The sample was then placed in a differential pressure adsorption unit. The adsorption unit consisted of two identical pressure cells which were spanned by a differential pressure gauge. The absolute pressure of the two cells are measured independently by pressure transducers. Adsorption of hydrogen by the sample was characterized by a relative decrease of the pressure in the sample cell relative to the reference cell while maintaining an identical temperature between the two cells. The sample was degassed at ambient temperature for 30 minutes under vacuum. Both the sample cell and reference cells were placed under 970 psia (67 bar) hydrogen and heated to 150°C. The hydrogen pressure in the sample cell dropped, relative to the reference cell, for a period of 17 hours, indicating adsorption of 3.2 wt. % hydrogen by the sample (Fig. 8). After 17 hours, the cells were cooled to ambient temperature and the pressure in both cells reduced to 20 psia (1.4 bar). Upon heating both cells to 150°C, there was a increase in the pressure of the sample cell relative to the reference cell, indicating desorption of hydrogen from the sample (Fig. 9). After 70 hours, the sample had desorbed 1.0 wt. % hydrogen (31 % of the sorbed hydrogen).

**Example 4:** Reversible Hydrogenation of Coronene with Palladium. A 0.1 g sample of coronene (95%, Acros Organics) was impregnated with palladium metal particles by RF sputtering. Subsequent TGA combustion analysis demonstrated a 3% loading of palladium metal in the coronene solid. The sample was then placed in a differential pressure adsorption unit. The adsorption unit consisted of two identical pressure cells which were spanned by a differential pressure gauge. The absolute pressure of the two cells are measured independently by pressure transducers. Adsorption of hydrogen by the sample was characterized by a relative decrease of the pressure in the sample cell relative to the reference cell while maintaining an identical temperature between the two cells. The sample was degassed at ambient temperature for 20 minutes under vacuum. Both the sample cell and reference cells were placed under 995 psia (69 bar) hydrogen and heated to 150°C. The hydrogen pressure in the sample cell dropped, relative to the reference cell, for a period of 63 hours, indicating adsorption of 4.9 wt. % hydrogen by the sample (Fig. 10, Cycle #1). After 63 hours, the pressure in both cells was reduced to 20 psia (1.4 bar). After about 24 hours at 150°C, both cells were heated to 200°C. Throughout the period of heating, up to about 40 hours, there was an increase in the pressure of the sample cell relative to the reference cell, indicating desorption of hydrogen from the sample (Fig. 11). After 40 hours, the sample had desorbed 4.5 wt. % hydrogen (92 % of the sorbed hydrogen). The cells were then cooled to 150°C and the hydrogen pressure in both cells was raised to 1005 psia (69 bar). The hydrogen pressure in the sample cell dropped, relative to the reference cell, for a period of 91 hours, indicating adsorption of 3.9 wt. % hydrogen by the sample (Fig. 10, Cycle #2). The pressure was dropped to 20 psia (1.4 bar) and the temperature raised to 200°C in both cells. Throughout the period of heating, up to about 9 hours, there was an increase in the pressure of the sample cell relative to the reference cell, indicating desorption of 3.5 wt. % hydrogen from the sample (90% of the sorbed hydrogen in cycle #2, Fig. 12).

**Example 5:** Reversible hydrogenation of hexabenzocoronene (HBC) with 5% Rh on carbon and mechanical grinding. A 0.06 g sample of hexabenzocoronene (HBC) and 0.03 g of rhodium on carbon catalyst (5% Rh, Acros

Organics) were ground by hand with an agate mortar and pestle until a uniform dark green mixture was formed. The mixture was then placed in a 50cc high pressure reactor (Parr instruments) equipped with a customized grinding apparatus. The grinding apparatus consisted of an elongated stirrer shaft with an arc-shaped paddle. The bottom of the reactor contained a stainless steel insert with a concave bottom, which allowed the paddle of the stirrer shaft to sweep the bottom of the reactor with 1/8" clearance. Mechanical agitation of the sample mixture was carried out by adding 5-8 stainless steel ball bearings of varying size (1/16"-¼" diameter). The stirrer motor was programmed such that rotational direction of the stirrer would alternate between clockwise and counterclockwise directions during the course of the reaction in order to ensure that all of the sample mixture would contact the grinding balls. Once the sample mixture and grinding balls were loaded into the reactor, the system was pressurized with helium to 1000 psia (69 bar) and vented. Pressurization and venting with helium was repeated three times. The reactor system was then twice pressurized to 1000 psia (69 bar) hydrogen and vented. The HBC was hydrogenated by heating the sample mixture to 200°C under 1130 psia (78 bar) hydrogen while the mixture was continuously ground for eight hours. The reactor was then quickly cooled to room temperature and vented to atmospheric pressure. Half of the sample mixture was removed from the reactor (h-HBC), and the remaining material was left in the reactor for dehydrogenation. The material to be dehydrogenated was purged as described above and ground at 200°C and 15 psia (1 bar) hydrogen for 16 hours before the reactor was cooled to room temperature. The sample was then removed for analysis (dh-HBC). Both of the hydrogenated HBC (h-HBC) and dehydrogenated h-HBC (dh-HBC) samples were separated from the catalyst by extraction with chloroform and filtering of the insoluble catalyst. The chloroform was then removed under vacuum to obtain the pure products which were analyzed by MALDI mass spectrometry using tetracyanoquinodimethane as the matrix. Upon hydrogenation of HBC (MW=522), a new mass arose at 540 m/z. This new mass accounted for the addition of nine hydrogen molecules. The spectrum of the dehydrogenated h-HBC showed the regeneration of HBC and diminishing of the hydrogenated product at 540 m/z. The conversion of HBC to h-HBC during hydrogenation was approximately 70%, whereas during dehydrogenation the conversion back to HBC from h-HBC was approximately 63%. Thus, the hydrogen storage capacity of HBC during hydrogenation was approximately 2.4 wt.%. The results of the hydrogenation of HBC (Table 6) and the subsequent dehydrogenation (Table 7) are shown below.

Table 6. Results of a mass spectroscopy study showing the relative abundance of the mass signal corresponding to the h-hexbenzocoronene components formed during hydrogenation of hexabenzocoronene.

| h-HBC Sample Components | Molecular Formula | Molecular Weight | Percentage of Sample Mixture |
|---|---|---|---|
| HBC | $C_{42}H_{18}$ | 522 | 28 |
| Hexahydro-HBC | $C_{42}H_{24}$ | 528 | 1 |
| Octadecahydro-HBC | $C_{42}H_{36}$ | 540 | 71 |

Table 7. Results of a mass spectroscopy study showing the relative abundance of the mass signal corresponding to the dh-hexbenzocoronene components formed during dehydrogenation of h-hexabenzocoronene.

| dh-HBC Sample Components | Molecular Formula | Molecular Weight | Percentage of Sample Mixture |
|---|---|---|---|
| HBC | $C_{42}H_{18}$ | 522 | 86 |
| Hexahydro-HBC | $C_{42}H_{24}$ | 528 | 5.5 |
| Dodecahydro-HBC | $C_{42}H_{30}$ | 534 | 0.65 |
| Octadecahydro-HBC | $C_{42}H_{36}$ | 540 | 8 |

**Example 6:** Reversible Hydrogenation of Coronene with Titanium Hydride and Mechanical Grinding. In an argon glovebox, a 0.1 g sample of coronene and 0.047 g of titanium hydride ($TiH_2$, Alfa Aesar) were ground by hand with an agate mortar and pestle until a uniform mixture was formed. In the glovebox, the mixture was then placed in a 50cc high pressure reactor (Parr instruments) equipped with a customized grinding apparatus. The grinding apparatus consisted of an elongated stirrer shaft with an arc-shaped paddle. The bottom of the reactor contained a stainless steel insert with a concave bottom, which allowed the paddle of the stirrer shaft to sweep the bottom of the reactor with 1/8" clearance. Mechanical agitation of the sample mixture was carried out by adding 5-8 stainless steel ball bearings of varying size (1/16" - ¼" diameter). The stirrer motor was programmed such that rotational direction of the stirrer would alternate between clockwise and counterclockwise directions during the course of the reaction in order to ensure that

all of the sample mixture would contact the grinding balls. Once the sample mixture and grinding balls were loaded into the reactor, the system was pressurized to 1000 psia (69 bar) hydrogen and vented. The coronene was hydrogenated by heating the sample mixture to 200°C under 1185 psia (82 bar) hydrogen while the mixture was continuously ground for two hours. The reactor was then quickly cooled to room temperature and vented to atmospheric pressure. The mixture was removed from the reactor and the hydrogenated coronene (h-coronene) was removed from the mixture by extracting with chloroform, filtering of the insoluble catalyst, and drying under vacuum. Proton NMR spectroscopy showed that the coronene resonance (singlet at 9 ppm) diminished significantly after hydrogenation while new upfield resonances, assigned to methylene hydrogens, appeared. The integration of these methylene resonances vs. the unhydrogenated coronene demonstrate a 44% conversion of coronene to hydrogenated coronene products.

To study the dehydrogenation of h-coronene using titanium hydride catalyst, 0.03 g of a h-coronene mixture containing 52% coronene and 48% hydrogenated coronene were ground by hand with 0.03 g of titanium hydride ($TiH_2$, Alfa Aesar) in an argon glovebox with an agate mortar and pestle until a uniform mixture was formed. In the glovebox, the mixture was then placed in a 50cc high pressure reactor (Parr instruments) equipped with a customized grinding apparatus. The grinding apparatus consisted of an elongated stirrer shaft with an arc-shaped paddle. The bottom of the reactor contained a stainless steel insert with a concave bottom, which allowed the paddle of the stirrer shaft to sweep the bottom of the reactor with 1/8" clearance. Mechanical agitation of the sample mixture was carried out by adding 5-8 stainless steel ball bearings of varying size (1/16" - ¼" diameter). The stirrer motor was programmed such that rotational direction of the stirrer would alternate between clockwise and counterclockwise directions during the course of the reaction in order to ensure that all of the sample mixture would contact the grinding balls. Once the sample mixture and grinding balls were loaded into the reactor, the system was pressurized to 1000 psia (69 bar) hydrogen and vented to 15 psia (1 bar). The h-coronene was dehydrogenated by heating the sample mixture to 150°C under 15 psia (1 bar) hydrogen while the mixture was continuously ground for seven hours. The reactor was then quickly cooled to room temperature. The mixture was removed from the reactor and the dehydrogenated coronene (dh-coronene) was removed from the mixture by extracting with chloroform, filtering of the insoluble catalyst, and drying under vacuum. GC-MS analysis was carried out on the dehydrogenated h-coronene, and the results indicated that approximately 90% of the h-coronene was converted to coronene upon dehydrogenation with titanium hydride.

**Example 8:** Dehydrogenation of Liquid Pyrene under 0.15 to 0.26 Bar Hydrogen Pressure. A 0.4 g sample of substantially hydrogenated pyrene (colorless liquid at 25°C, h-pyrene) and 0.2 g platinum on carbon catalyst (10% Pt, Strem) were placed in a 50cc high pressure reactor (Parr instruments) equipped with a customized grinding apparatus. The grinding apparatus consisted of an elongated stirrer shaft with an arc-shaped paddle. The bottom of the reactor contained a stainless steel insert with a concave bottom, which allowed the paddle of the stirrer shaft to sweep the bottom of the reactor with 1/8" clearance. Mechanical agitation of the sample mixture was carried out by adding 5-8 stainless steel ball bearings of varying size (1/16" - ¼" diameter). The stirrer motor was programmed such that rotational direction of the stirrer would alternate between clockwise and counterclockwise directions during the course of the reaction in order to ensure that all of the sample mixture would contact the grinding balls. Once the sample mixture and grinding balls were loaded into the reactor, the system was evacuated for 5 minutes and pressurized with helium to 700 psia (48.3 bar) and vented. Pressurization and venting with helium was repeated three times. The system was again evacuated and filled with a 15% hydrogen/85% helium mixture. The sample was dehydrogenated by grinding at 160°C under a 15% hydrogen/85% helium mixture for 24 hours, initially at 15 psia (1 bar) for a hydrogen partial pressure of 2.25 psia (0.1 bar) and, over the course of the heating and evolution of hydrogen from the dehydrogenation reaction, the pressure increased to 24 psia (1.7 bar) for a hydrogen partial pressure of about 3.6 psia (0.26 bar). After reaction, the reactor was quickly cooled to room temperature and vented. The sample mixture (dh-pyrene) was removed from the reactor and separated from the catalyst by extraction with chloroform (HPLC grade, Fisher) and filtering of the insoluble catalyst. The chloroform was then removed under vacuum to obtain the pure products. GC-MS was used to analyze the hydrogenated pyrene and dehydrogenated h-pyrene. Tables 10-11 show the product distribution of h-pyrene and dh-pyrene calculated from GC-MS from areas normalized for those masses:

Table 10. Product distribution of h-pyrene calculated from GC-MS from areas normalized for those masses.

| h-pyrene Sample Components | Molecular Formula | Percentage of Sample Mixture |
|---|---|---|
| Pyrene | $C_{16}H_{10}$ | 0 |
| decahydropyrene | $C_{16}H_{20}$ | 35 |
| hexadecahydropyrene | $C_{16}H_{26}$ | 65 |

Table 11. Product distribution of dh-pyrene calculated from GC-MS from areas normalized for those masses.

| dh-pyrene Sample Components | Molecular Formula | Percentage of Sample Mixture |
|---|---|---|
| Pyrene | $C_{16}H_{10}$ | 5 |
| dihydropyrene | $C_{16}H_{12}$ | 6.5 |
| tetrahydropyrene | $C_{16}H_{14}$ | 1.5 |
| hexahydropyrene | $C_{16}H_{16}$ | 25.4 |
| decahydropyrene | $C_{16}H_{20}$ | 5.7 |
| hexadecahydropyrene | $C_{18}H_{26}$ | 56 |

As calculated from Tables 10 and 11 above, the gravimetric hydrogen storage capacity of the hydrogenated pyrene + catalyst was 4.7 wt.% and after dehydrogenation the capacity was reduced to 3.7 wt.% hydrogen. This corresponds to approximately 21% of the stored hydrogen being released during dehydrogenation of h-pyrene.

**Example 9:** Dehydrogenation of Liquid pyrene under 1 bar hydrogen pressure. A 0.4 g sample of substantially hydrogenated pyrene (colorless liquid at 25°C, h-pyrene) and 0.2 g rhodium on carbon catalyst (5% Rh, Acros Organics) were placed in a 50cc high pressure reactor (Parr instruments) equipped with a customized grinding apparatus. The grinding apparatus consisted of an elongated stirrer shaft with an arc-shaped paddle. The bottom of the reactor contained a stainless steel insert with a concave bottom, which allowed the paddle of the stirrer shaft to sweep the bottom of the reactor with 1/8" clearance. Mechanical agitation of the sample mixture was carried out by adding 5-8 stainless steel ball bearings of varying size (1/16" - ¼" diameter). The stirrer motor was programmed such that rotational direction of the stirrer would alternate between clockwise and counterclockwise directions during the course of the reaction in order to ensure that all of the sample mixture would contact the grinding balls. Once the sample mixture and grinding balls were loaded into the reactor, the system was evacuated for 5 minutes and pressurized with helium to 1000 psia (69 bar) and vented. Pressurization and venting with helium was repeated three times. The system was filled with 14.5 psia hydrogen (1 bar). The sample was dehydrogenated by grinding at 150°C under 23 psia (1.6 bar) hydrogen pressure for 16 hours. After reaction, the reactor was quickly cooled to room temperature and vented. The still-liquid sample mixture (dh-pyrene) was removed from the reactor and separated from the catalyst by extraction with chloroform (HPLC grade, Fisher) and filtering of the insoluble catalyst. The chloroform was then removed under vacuum to obtain the pure products. GC-MS was used to analyze the hydrogenated pyrene and dehydrogenated h-pyrene. Tables 12 and 13 show the product distribution of h-pyrene and dh-pyrene calculated from GC-MS from areas normalized for those masses:

Table 12. Product distribution of h-pyrene calculated from GC-MS from areas normalized for those masses.

| h-pyrene Sample Components | Molecular Formula | Percentage of Sample Mixture |
|---|---|---|
| Pyrene | $C_{16}H_{10}$ | 0 |
| decahydropyrene | $C_{16}H_{20}$ | 35 |
| hexadecahydropyrene | $C_{16}H_{26}$ | 65 |

Table 13. Product distribution of dh-pyrene calculated from GC-MS from areas normalized for those masses.

| dh-pyrene Sample Components | Molecular Formula | Percentage of Sample Mixture |
|---|---|---|
| Pyrene | $C_{16}H_{10}$ | 9.1 |
| dihydropyrene | $C_{16}H_{12}$ | 4.5 |
| tetrahydropyrene | $C_{16}H_{14}$ | 0.4 |
| hexahydropyrene | $C_{16}H_{16}$ | 20.3 |
| octahydropyrene | $C_{16}H_{18}$ | 0.3 |
| decahydropyrene | $C_{16}H_{20}$ | 19.4 |
| hexadecahydropyrene | $C_{16}H_{26}$ | 46 |

As calculated from Tables 12 and 13 above, the gravimetric hydrogen storage capacity of the hydrogenated

pyrene + catalyst was 4.7 wt.% and after dehydrogenation the capacity was reduced to 3.5 wt.% hydrogen. This corresponds to approximately 25% of the stored hydrogen being released during dehydrogenation of h-pyrene.

**Comparative Example 1:** Reversible Hydrogenation of Pentacene with 5% Rh on carbon catalyst. A 0.100 g sample of pentacene (Aldrich) and 0.050 g of rhodium on carbon catalyst (5% Rh, Acros Organics) were ground with an agate mortar and pestle for 15 minutes until a uniform mixture was formed. The sample was then placed in a differential pressure adsorption unit. The adsorption unit consisted of two identical pressure cells which were spanned by a differential pressure gauge. The absolute pressure of the two cells was measured independently by pressure transducers. Adsorption of hydrogen by the sample was characterized by a relative decrease of the pressure in the sample cell relative to the reference cell while maintaining an identical temperature between the two cells. The sample was degassed at ambient temperature for 20 minutes under vacuum. Both the sample cell and reference cell were placed under 980 psia (67.6 bar) hydrogen and heated to 150°C. The hydrogen pressure in the sample cell dropped, relative to the reference cell, for a period of about 8 hours, indicating adsorption of 5.5 wt.% hydrogen by the sample (Fig. 18). After 14 hours, the cells were cooled to ambient temperature and the pressure in both cells reduced to 18 psia (1.25 bar). Upon heating both cells to 150°C, there was a small increase in the pressure of the sample cell relative to the reference cell, indicating desorption of hydrogen from the sample (Fig. 19). After 70 hours, the sample had desorbed 0.15 wt. % hydrogen (2.7% of the sorbed hydrogen).

**Comparative Example 2:** Attempted Dehydrogenation of Decahydronaphthalene (Decalin) with 5% Rh on Carbon Catalyst. A 4.0 g sample of decahydronaphthalene (33% *cis*- and 66% *trans*-decalin, 99+%, Aldrich) and 2.0 g of rhodium on carbon catalyst (5% Rh, Acros Organics) were placed in a 25cc high pressure reactor (Parr instruments). Once the sample mixture was loaded into the reactor, the system was pressurized with helium to 1000 psia (69 bar) and vented. Pressurization and venting with helium was repeated three times. The reactor was pressurized with 1000 psia (69 bar) hydrogen at 150°C with stirring for one hour to activate the catalyst. The reactor system was vented down to 15 psia (1 bar) hydrogen pressure. Dehydrogenation was attempted by continuous heating at 150°C under 15 psia (1 bar) hydrogen for 16 hours. After cooling the reactor to room temperature, the sample was isolated by extraction with chloroform, filtering of the catalyst, and drying under vacuum. GC-MS indicated that the sample comprised 100% unreacted decahydronaphthalene and no detectable dehydrogenation had occurred.

### 6.1 DISCUSSION OF THE EXAMPLES

Example 1 demonstrates that the reversible hydrogenation of pyrene ($C_{16}H_{10}$) can be achieved under mild conditions and short reaction times starting from solid pyrene and a solid admixed catalyst. Under 1000 psia (69 bar) of hydrogen gas pressure at 95°C with moderate mechanical grinding, the conversion of pyrene to hydrogenated pyrene compounds ($C_{16}H_{12}$ - $C_{16}H_{26}$) is 99.5% in 1.5 hours (Table 2). This is a 2.3 wt.% increase of the gravimetric hydrogen capacity on a total sample weight basis (pyrene + catalyst). The temperature at which the hydrogenation is carried out is well below the melting point of pyrene (149°C). The hydrogenated pyrene can be isolated as a solid material at room temperature that shows a melting point onset of approximately 110°C. Thus, it is likely that pyrene, a solid at the onset of the hydrogenation, remains a solid during the hydrogenation reaction carried out at 95°C. The mixture of hydrogenated pyrene compounds can be dehydrogenated, under 15 psia (1 bar) hydrogen gas pressure, at 95°C with moderate mechanical grinding. After three hours under these conditions, 25% of the sample was converted back to pyrene and the abundance of dihydropyrene ($C_{16}H_{12}$) was increased relative to the more deeply hydrogenated species.

Example 2 teaches that the reversible hydrogenation of coronene ($C_{24}H_{12}$) can be achieved under mild conditions and short reaction times starting from solid coronene and a solid admixed catalyst. Under 1045 psia (72 bar) of hydrogen gas pressure at 150°C with moderate mechanical grinding, the conversion of coronene to hydrogenated coronene compounds ($C_{24}H_{22}$ - $C_{24}H_{30}$) is 99+% in 4 hours (Table 4). This is a 3.5 wt.% increase of the gravimetric hydrogen capacity on a total sample weight basis (coronene + catalyst). The temperature at which the hydrogenation is carried out is far below the melting point of coronene (442°C). The hydrogenated coronene can be isolated as a solid material at room temperature that shows a melting point onset at approximately 280°C. Thus, it is likely that coronene, a solid at the onset of hydrogenation, remains a solid during the hydrogenation reaction carried out at 150°C. The mixture of hydrogenated coronene compounds can be dehydrogenated, under 15 psia (1 bar) hydrogen gas pressure, at 150°C with moderate mechanical grinding. After 16 hours under these conditions, 91% of the sample was converted back to coronene (Table 5).

Example 3 demonstrates that the reversible hydrogenation of coronene can be used to store hydrogen under mild conditions of temperature and pressure and in the absence of mechanical grinding, using solid coronene and a solid admixed catalyst. Under 970 psia (67 bar) of hydrogen gas pressure at 150°C, a 3.2 wt.% increase of the gravimetric hydrogen capacity on a total sample weight basis (coronene + catalyst) is observed over a period of 17 hours (Fig. 8). The mixture of hydrogenated coronene compounds can be dehydrogenated, under 20 psia (1.4 bar) hydrogen gas pressure, at 150°C in the absence of mechanical grinding. After 70 hours under these conditions the sample desorbed 1.0 wt. % hydrogen (Fig. 9, 31% of the sorbed hydrogen).

Example 4 demonstrates that the reversible hydrogenation of coronene can be used to store large quantities of hydrogen under mild conditions of temperature and pressure and in the absence of mechanical grinding, using solid coronene and a solid admixed catalyst. The adsorbent can be subjected to multiple cycles of hydrogenation and dehydrogenation, thus forming the basis for a cyclic hydrogen storage process. Under 995 psia (68.6 bar) of hydrogen gas pressure at 150°C, a 4.9 wt.% increase of the gravimetric hydrogen capacity on a total sample weight basis (coronene + catalyst) is observed over a period of 63 hours (Fig. 10, cycle #1). The mixture of hydrogenated coronene compounds can be dehydrogenated, under 20 psia (1.4 bar) hydrogen gas pressure, at between 150°C and 200°C in the absence of mechanical grinding (Fig. 7). After 24 hours at 150°C and 14 hours at 200°C the sample desorbed 4.5 wt. % hydrogen (92% of the sorbed hydrogen). The sample was hydrogenated a second time; under 1005 psia (69.4 bar) of hydrogen gas pressure at 150°C, a 3.9 wt.% increase of the gravimetric hydrogen capacity on a total sample weight basis (coronene + catalyst) is observed over a period of 91 hours (Fig. 10, cycle #2). The mixture of hydrogenated coronene compounds can be dehydrogenated, under 20 psia (1.4 bar) hydrogen gas pressure, at 200°C in the absence of mechanical grinding (Fig. 11). After 9 hours at 200°C the sample desorbed 3.5 wt. % hydrogen (90% of the sorbed hydrogen). Figs. 11 and 12 further demonstrate an advantage of gas/solid hydrogenation and dehydrogenation of a two component solid system (hydrogenated and dehydrogenated forms of the solid substrate) in that the hydrogenation and dehydrogenation of the solid can easily and effectively go to completion under equilibrium conditions.

Example 5 teaches that the reversible hydrogenation of hexabenzocoronene ($C_{42}H_{18}$) can be achieved starting from solid hexabenzocoronene and a solid admixed catalyst. Under 1130 psia (78 bar) of hydrogen gas pressure at 200°C with moderate mechanical grinding, the conversion of hexabenzocoronene to hydrogenated hexabenzocoronene compounds ($C_{42}H_{24}$ - $C_{42}H_{36}$) is 72% in 8 hours (Table 6). This represents a 1.65 wt.% increase of the gravimetric hydrogen capacity on a total sample weight basis (hexabenzocoronene + catalyst). The temperature at which the hydrogenation is carried out is 500+°C below the melting point of hexabenzocoronene (700+°C). Thus, it is extremely likely that hexabenzocoronene, a solid at the onset of hydrogenation, remains a solid during the hydrogenation reaction carried out at 200°C. The mixture of hydrogenated hexabenzocoronene compounds can be dehydrogenated, under 15 psia (1 bar) hydrogen gas pressure, at 200°C with moderate mechanical grinding. After 16 hours under these conditions, 58% of the hydrogenated hexabenzocoronene was converted back to hexabenzocoronene.

Example 6 demonstrates that the reversible hydrogenation of coronene ($C_{24}H_{12}$) can be achieved under mild conditions and short reaction times starting from solid coronene and a solid admixed catalyst from the group of early transition metals (Sc, Y, Ti, Zr, Hf, V, Nb, Ta). This is notable in that metals and metal alloys of the late transition metals (Fe, Ru, Os, Co, Rh, Ir, Ni, Pd, Pt) are typically employed as catalysts for hydrogenation and/or dehydrogenation. In addition, this example teaches that a catalyst in the form of a stable metal hydride ($MH_x$) can be utilized for the reversible hydrogenation of extended pi-conjugated substrates. Under 1185 psia (82 bar) of hydrogen gas pressure at 200°C with moderate mechanical grinding, the conversion of coronene to hydrogenated coronene compounds (h-coronene) is 44% in only 2 hours. The mixture of hydrogenated coronene compounds can be dehydrogenated, under 15 psia (1 bar) hydrogen gas pressure, at 150°C with moderate mechanical grinding. After 7 hours under these conditions, 90% of the h-coronene was converted back to coronene.

Example 8 demonstrates that the dehydrogenation of a hydrogenated liquid extended pi-conjugated substrate as taught by this invention can be achieved under mild conditions. Starting from a liquid hydrogenated pyrene and a solid admixed catalyst under 24 psia (1.7 bar) of 15% hydrogen/85% helium gas pressure at 160°C with moderate mechanical grinding, the conversion of hydrogenated pyrene ($C_{16}H_{20}$-$C_{16}H_{26}$) to dehydrogenated pyrene compounds ($C_{16}H_{10}$ - $C_{16}H_{26}$) results in liberation of 21 % of the stored hydrogen (Table 11). Due to the extensive hydrogenation of the pyrene (Table 9), the melting point of the starting liquid is below 25°C. After the dehydrogenation was ended, the mixture of dehydrogenated pyrene compounds ($C_{16}H_{10}$ - $C_{16}H_{26}$) was still found to be liquid at 25°C.

Example 9 demonstrates that the dehydrogenation of a hydrogenated liquid substrate can be achieved at a mild temperature under hydrogen partial pressures of greater than about 1 bar. Starting from a liquid hydrogenated pyrene and a solid admixed catalyst under 23 psia (1.7 bar) of hydrogen gas pressure at 150°C with moderate mechanical grinding, the conversion of hydrogenated pyrene ($C_{16}H_{20}$ - $C_{16}H_{26}$) to dehydrogenated pyrene compounds ($C_{16}H_{10}$ - $C_{16}H_{26}$) results in liberation of 25% of the stored hydrogen (Table 13). Due to the extensive hydrogenation of the pyrene (Table 12), the melting point of the starting liquid is below 25°C. After the dehydrogenation was ended, the mixture of dehydrogenated pyrene compounds ($C_{16}H_{10}$ - $C_{16}H_{26}$) was still found to be liquid at 25°C. The extent of dehydrogenation of liquid hydrogenated pyrene can be compared to that of liquid decalin in comparative Example 2. At the same temperature (150°C) and even lower hydrogen pressure (15 psia), the dehydrogenation of decalin proceeded to undetectable (<0.5 %) conversion after 16 hours.

Comparative Example 1 demonstrates that the reversible hydrogenation of pentacene, a five-ring EPAH containing only one aromatic sextet, is not an efficient process for the storage of hydrogen under mild conditions of temperature and pressure using solid pentacene and a solid admixed catalyst. The $\Delta H°$ for the hydrogenation of pentacene (-17.5 kcal/mol $H_2$) is substantially larger than the $\Delta H°$ for the hydrogenation of coronene (-13.8 kcal/mol $H_2$). Under 980 psia (67.6 bar) of hydrogen gas pressure at 150°C, a 5.5 wt.% increase of the gravimetric hydrogen capacity on a total

sample weight basis (pentacene + catalyst) is observed over a period of 10 hours (Fig. 18). The difference in ΔH° of hydrogenation is manifested by an apparent increase in hydrogenation efficiency for pentacene (5.5 wt. % $H_2$ adsorbed in 10 hours) vs. coronene (3.2 wt. % $H_2$ adsorbed in 17 hours) under essentially identical process conditions. The temperature at which the hydrogenation is carried out is far below the melting point of pentacene (m.p.>300°C). Thus it is likely that pentacene, a solid at the onset of hydrogenation, remains a solid during the hydrogenation and dehydrogenation reactions carried out at 150°C. The mixture of hydrogenated pentacene compounds are not dehydrogenated at an effective conversion, under 18 psia (1.25 bar) hydrogen gas pressure, at 150°C. After 70 hours under these conditions the sample desorbs only 0.15 wt. % hydrogen (Fig. 19, 2.7% of the sorbed hydrogen). This is compared to the dehydrogenation of coronene in Example 3 where after 70 hours at these same conditions the hydrogenated coronene sample desorbs 1.0 wt. % hydrogen (Fig. 9, 31% of the initially sorbed hydrogen). The greater than order-of-magnitude (11.5 x) decrease in percentage of desorbed hydrogen for pentacene compared to coronene under identical process conditions again illustrates the substantial difference of ΔH° for hydrogenation between these two polyaromatic hydrocarbon molecules and the importance of ΔH° of hydrogenation in a hydrogen storage system based upon reversible hydrogenation of polyaromatic hydrocarbon.

Comparative Example 2 demonstrates that an aromatic hydrocarbon, which is taught in the art as a hydrogen carrier that can release hydrogen by a catalytic dehydrogenation, is not effective for reversible hydrogen storage under the milder and more useful conditions of temperature and hydrogen pressure described in the current invention. Decahydronaphthalene (decalin) was subjected to more rigorous dehydrogenation conditions as compared to hydrogenated pyrene (Example 1) and essentially identical dehydrogenation conditions as hydrogenated coronene (Example 2). The decalin sample was heated with catalyst to 150°C under 15 psia (1 bar) hydrogen gas pressure. After 16 hours under these conditions there was no measurable conversion (<0.5%) of decalin to any dehydrogenated products. This dehydrogenation result compares unfavorably to those for liquid pyrene (Example 9, 25% dehydrogenated at 150°C, 16 hours, 1 bar hydrogen pressure) and hydrogenated coronene (Example 2, 91% dehydrogenated at 150°C, 16 hours, 1 bar hydrogen pressure) in Examples 1 and 2. Although pyrene can be either a solid or liquid during the dehydrogenation process conditions depending on conversion (see discussion of Examples 1 and 8), it is likely that coronene is solid during the both hydrogenation and dehydrogenation. Decalin is a liquid at 150°C.

## Claims

**1.** A process for the storage and subsequent release of hydrogen comprising:

a) contacting hydrogen, in the presence of a hydrogenation catalyst under hydrogenation conditions, with an extended pi-conjugated substrate to effect storage of hydrogen by forming an at least partially hydrogenated extended pi-conjugated substrate; wherein the extended pi-conjugated substrate is selected from the group consisting of extended polycyclic aromatic hydrocarbons which are either (1) a polycyclic aromatic hydrocarbon comprising a fused ring system having at least four rings wherein all rings of the fused ring system are represented as 6-membered aromatic sextet structures or (2) a polycyclic aromatic hydrocarbon of more than two rings comprising a six-membered aromatic sextet ring fused with a five membered ring; and indene; and any combination of two or more of the foregoing and thereafter

b) contacting the at least partially hydrogenated extended pi-conjugated substrate under dehydrogenation conditions in the presence of an effective amount of a dehydrogenation catalyst to release hydrogen from the at least partially hydrogenated extended pi-conjugated substrate.

**2.** The process of claim 1, wherein the extended pi-conjugated substrate is selected from the group consisting of pyrene, perylene, coronene, ovalene, picene, rubicene, fluorene, indene, and acenaphthylene; and any combination of two or more of the foregoing.

**3.** The process of claim 1, wherein the extended pi-conjugated substrate is comprised in at least one pitch or pitch fraction selected from the group consisting of natural pitch, synthetic pitch, synthetic pitch containing molecules with nitrogen heteroatoms, and combinations thereof.

**4.** The process of claim 1, wherein the hydrogenation catalyst also functions as the dehydrogenation catalyst.

**5.** The process of claim 1, wherein the extended pi-conjugated substrate in step a) resides in the liquid state and step a) is conducted in a first vessel; and the at least partially hydrogenated extended pi-conjugated substrate in step b) resides in the liquid state and step b) is conducted in a second vessel.

6. The process of claim 1, wherein the hydrogen released in step b) is at least 1% by weight of the weight of the at least partially hydrogenated extended pi-conjugated substrate.

7. The process of claim 1 further comprising c) removing the hydrogenation catalyst from the at least partially hydrogenated extended pi-conjugated substrate obtained from step a) prior to conducting step b).

8. The process of claim 1, wherein step b) is conducted at a temperature below 300 °C and at a hydrogen partial pressure greater than 0.1 bar.

9. The process of claim 1, wherein the modulus of the standard enthalpy change of hydrogenation of the extended pi-conjugated substrate in step a) is less than 15.0 kcal/mol $H_2$.

10. The process of claim 1, wherein the at least partially hydrogenated extended pi-conjugated substrate in step a) comprises a mixture of at least two different at least partially hydrogenated extended pi-conjugated substrates.

11. The process of claim 1, wherein the hydrogenation catalyst in step a) comprises a metal selected from the group consisting of titanium, zirconium, cobalt, niobium, tantalum, iron, molybdenum, tungsten, ruthenium, rhodium, iridium, nickel, palladium, and platinum.

12. The process of claim 1, wherein the dehydrogenation catalyst in step b) comprises a metal selected from the group consisting of titanium, zirconium, cobalt, niobium, tantalum, iron, molybdenum, tungsten, ruthenium, rhodium, iridium, nickel, palladium, and platinum.

13. The process of claim 1, wherein the at least partially hydrogenated extended pi-conjugated substrate comprises a mixture of conformers of the at least partially hydrogenated substrate.

14. The process of claim 1, wherein the at least partially hydrogenated extended pi-conjugated substrate is a liquid at the dehydrogenation conditions of step b).

15. The process of claim 1, wherein the at least partially hydrogenated extended pi-conjugated substrate is a solid at the dehydrogenation conditions of step b).

16. The process of claim 1, wherein the extended pi-conjugated substrate and the at least partially hydrogenated extended pi-conjugated substrate are liquids at the dehydrogenation conditions of step b).

17. A process for the storage of hydrogen comprising contacting hydrogen gas with a solid extended pi-conjugated substrate as defined in any one of the claims 1 to 3 in the presence of an effective amount of a hydrogenation catalyst under hydrogenation conditions to at least partially hydrogenate the extended pi-conjugated substrate.

18. A process for the storage of hydrogen comprising contacting hydrogen gas at a hydrogen partial pressure greater than about 6.7 bar and at a temperature of between about 50 °C and about 300 °C with a solid extended pi-conjugated substrate as defined in any one of the claims 1 to 3 in the presence of an effective amount of a hydrogenation catalyst to at least partially hydrogenate the extended pi-conjugated substrate.

**Patentansprüche**

1. Ein Verfahren zur Speicherung und anschließenden Freisetzung von Wasserstoff, umfassend:

a) In-Kontakt-Bringen von Wasserstoff in der Gegenwart eines Hydrierungs-Katalysators unter Hydrierungsbedingungen mit einem Substrat mit einem ausgedehnten pi-konjugierten System, um Speicherung von Wasserstoff durch Bildung eines wenigstens teilweise hydrierten Substrats mit ausgedehntem pi-konjugierten System zu erreichen, wobei das Substrat mit dem ausgedehntem pi-konjugierten System ausgewählt ist aus der Gruppe bestehend aus ausgedehnten polyzyklischen aromatischen Kohlenwasserstoffen, die entweder (1) ein polyzyklischer aromatischer Kohlenwasserstoff enthaltend ein kondensiertes Ringsystem mit wenigstens vier Ringen, wobei alle Ringe des kondensierten Ringsystems als 6-gliedrige aromatische Sextett-Strukturen repräsentiert werden, oder (2) ein polyzyklischer aromatischer Kohlenwasserstoff mit mehr als zwei Ringen, welcher einen 6-gliedrigen aromatischen Sextett-Ring kondensiert mit einem 5-gliedrigen Ring enthält, sind; und Inden; und

irgendeiner Kombination von zwei oder mehr der vorhergehenden Kohlenwasserstoffe, und danach
b) In-Kontakt-Bringen des wenigstens teilweise hydrierten Substrats mit ausgedehntem pi-konjugierten System unter Dehydrierungs-Bedingungen in der Gegenwart einer wirksamen Menge eines Dehydrierungs-Katalysators, um Wasserstoff aus dem wenigstens teilweise hydrierten Substrat mit ausgedehntem pi-konjugierten System freizusetzen.

**2.** Das Verfahren gemäß Anspruch 1, wobei das Substrat mit ausgedehntem pi-konjugierten System ausgewählt ist aus der Gruppe bestehend aus Pyren, Perylen, Coronen, Ovalen, Picen, Rubicen, Fluoren, Inden und Azenaphtylen; und aus irgendeiner Kombination von zwei oder mehr der vorhergehenden Verbindungen.

**3.** Das Verfahren gemäß Anspruch 1, wobei das Substrat mit ausgedehntem pi-konjugierten System enthalten ist in wenigstens einer Pechblende oder einer Pechblende-Fraktion ausgewählt aus der Gruppe bestehend aus natürlicher Pechblende, synthetischer Pechblende, synthetischer Pechblende enthaltend Moleküle mit Stickstoff-Heteroatomen, und Kombinationen davon.

**4.** Das Verfahren gemäß Anspruch 1, wobei der Hydrierungs-Katalysator auch als der Dehydrierungs-Katalysator fungiert.

**5.** Das Verfahren gemäß Anspruch 1, wobei das Substrat mit ausgedehntem pi-konjugierten System in Schritt a) in flüssigem Zustand ist und wobei Schritt a) in einem ersten Gefäß durchgeführt wird; und wobei das wenigstens teilweise hydrierte Substrat mit ausgedehntem pi-konjugierten System in Schritt b) in flüssigem Zustand ist, und Schritt b) in einem zweiten Gefäß durchgeführt wird.

**6.** Das Verfahren gemäß Anspruch 1, wobei der Wasserstoff, der in Schritt b) freigesetzt wird, wenigstens 1 Gew.-% beträgt bezogen auf das Gewicht des wenigstens teilweise hydrierten Substrats mit ausgedehntem pi-konjugierten System.

**7.** Das Verfahren gemäß Anspruch 1, des Weiteren umfassend c) Trennen des Hydrierungs-Katalysators von dem wenigstens teilweise hydrierten Substrat mit ausgedehntem pi-konjugierten System, das in Schritt a) erhalten wurde, bevor Schritt b) durchgeführt wird.

**8.** Das Verfahren gemäß Anspruch 1, wobei Schritt b) bei einer Temperatur niedriger als 300°C und einem Wasserstoffpartialdruck höher als 0,1 bar durchgeführt wird.

**9.** Das Verfahren gemäß Anspruch 1, wobei der Modulus der Standard-Enthalpieänderung für die Hydrierung des Substrates mit ausgedehntem pi-konjugierten System in Schritt a) weniger als 15,0 kcal/mol $H_2$ beträgt.

**10.** Das Verfahren gemäß Anspruch 1, wobei das wenigstens teilweise hydrierte Substrat mit ausgedehntem pi-konjugierten System in Schritt a) eine Mischung von wenigstens zwei verschiedenen wenigstens teilweise hydrierten Substraten mit ausgedehntem pi-konjugierten System enthält.

**11.** Das Verfahren gemäß Anspruch 1, wobei der Hydrierungs-Katalysator in Schritt a) ein Metall enthält ausgewählt aus der Gruppe bestehend aus Titan, Zirkon, Kobalt, Niob, Tantal, Eisen, Molybdän, Wolfram, Ruthenium, Rodium, Iridium, Nickel, Palladium, und Platin.

**12.** Das Verfahren gemäß Anspruch 1, wobei der Dehydrierungs-Katalysator in Schritt b) ein Metall enthält ausgewählt aus der Gruppe bestehend aus Titan, Zirkon, Kobalt, Niob, Tantal, Eisen Molybdän, Wolfram, Ruthenium, Rodium, Iridium, Nickel, Palladium, und Platin.

**13.** Das Verfahren gemäß Anspruch 1, wobei das wenigstens teilweise hydrierte Substrat mit ausgedehntem pi-konjugierten System eine Mischung aus Konformeren des wenigstens teilweise hydrierten Substrats enthält.

**14.** Das Verfahren gemäß Anspruch 1, wobei das wenigstens teilweise hydrierte Substrat mit ausgedehntem pi-konjugierten System bei den Dehydrierungsbedingungen des Schritts b) eine Flüssigkeit ist.

**15.** Das Verfahren gemäß Anspruch 1, wobei das wenigstens teilweise hydrierte Substrat mit ausgedehntem pi-konjugierten System bei den Dehydrierungsbedingungen des Schritts b) ein Feststoff ist.

**16.** Das Verfahren gemäß Anspruch 1, wobei das Substrat mit dem ausgedehnten pi-konjugierten System und das wenigstens teilweise hydrierte Substrat mit ausgedehntem pi-konjugierten System bei den Dehydrierungsbedingungen von Schritt b) Flüssigkeiten sind.

**17.** Ein Verfahren zur Speicherung von Wasserstoff, umfassend das InKontakt-Bringen von Wasserstoffgas mit einem festen Substrat mit ausgedehntem pi-konjugierten System, wie in irgendeinem der Ansprüche 1 bis 3 definiert, in der Gegenwart einer wirksamen Menge eines Hydrierungs-Katalysators unter Hydrierungs-Bedingungen, um das Substrat mit ausgedehntem pi-konjugierten System wenigstens teilweise zu hydrieren.

**18.** Ein Verfahren zur Speicherung von Wasserstoff, umfassend das In-Kontakt-Bringen von Wasserstoffgas mit einem Wasserstoffpartialdruck von mehr als etwa 6,7 bar und bei einer Temperatur von zwischen etwa 50°C und etwa 300°C mit einem festen Substrat mit ausgedehntem pi-konjugierten System, wie in irgendeinem der Ansprüche 1 bis 3 definiert, in der Gegenwart einer wirksamen Menge eines Hydrierungs-Katalysators, um das Substrat mit ausgedehntem pikonjugierten System wenigstens teilweise zu hydrieren.

## Revendications

**1.** Procédé de stockage et libération subséquente de l'hydrogène comprenant les étapes qui consistent à :

a) mettre l'hydrogène, en présence d'un catalyste d'hydrogénation dans des conditions d'hydrogénation, en contact avec un substrat conjugué-pi étendu pour effectuer le stockage de l'hydrogène en formant un substrat conjugué-pi étendu au moins partiellement hydrogéné ; dans lequel le substrat conjugué-pi étendu est choisi dans le groupe constitué par des hydrocarbures aromatiques polycycliques étendus étant soit (1) un hydrocarbure aromatique polycyclique comprenant un système cyclique condensé ayant au moins quatre cycles dans lequel tous les cycles du système cyclique condensé sont représentés comme des structures de sextets aromatiques à 6 membres ou (2) un hydrocarbure aromatique polycyclique de plus de deux cycles comprenant un cycle sextet aromatique à 6 membres condensé avec un cycle à cinq membres ; et indène ; et toute combinaison de deux ou plus de ce qui précède et de ce qui suit

b) mettre le substrat conjugué-pi étendu au moins partiellement hydrogéné dans des conditions de déshydrogénation en présence d'une quantité efficace d'un catalyseur de déshydrogénation afin de libérer de l'hydrogène du substrat conjugué-pi étendu au moins partiellement hydrogéné.

**2.** Procédé selon la revendication 1, dans lequel le substrat conjugué-pi étendu est choisi dans le groupe constitué par pyrène, pérylène, coronène, ovalène, picène, rubicène, fluorène, indène, et acénaphtylène ; et toute combinaison de deux ou plus de ce qui précède.

**3.** Procédé selon la revendication 1, dans lequel le substrat conjugué-pi étendu est compris dans au moins une poix ou une fraction de poix choisie dans le groupe constitué par de la poix naturelle, de la poix synthétique, de la poix synthétique contenant des molécules avec des hétéroatomes d'azote, et des combinaisons de ces dernières.

**4.** Procédé selon la revendication 1, dans lequel le catalyste d'hydrogénation est également utilisé comme catalyste de déshydrogénation.

**5.** Procédé selon la revendication 1, dans lequel le substrat conjugué-pi étendu de l'étape a) réside à l'état liquide et l'étape a) est effectuée dans un premier récipient ; et le substrat conjugué-pi étendu au moins partiellement hydrogéné de l'étape b) réside à l'état liquide et l'étape b) est effectuée dans un deuxième récipient.

**6.** Procédé selon la revendication 1, dans lequel l'hydrogène libéré à l'étape b) représente au moins 1 % en poids du poids du substrat conjugué-pi étendu au moins partiellement hydrogéné.

**7.** Procédé selon la revendication 1 comprenant en outre l'étape consistant à c) enlever le catalyseur d'hydrogénation du substrat conjugué-pi étendu au moins partiellement hydrogéné obtenu à partir de l'étape a) avant d'effectuer l'étape b).

**8.** Procédé selon la revendication 1, dans lequel l'étape b) est effectuée à une température inférieure à 300 °C et à une pression partielle d'hydrogène supérieure à 0,1 bar.

9. Procédé selon la revendication 1, dans lequel le module de la variation d'enthalpie standard d'hydrogénation du substrat conjugué-pi étendu de l'étape a) est inférieur à 15,0 kcal/mol $H_2$.

10. Procédé selon la revendication 1, dans lequel le substrat conjugué-pi étendu au moins partiellement hydrogéné de l'étape a) comprend un mélange d'au moins deux substrats conjugués-pi étendus au moins partiellement hydrogénés différents.

11. Procédé selon la revendication 1, dans lequel le catalyseur d'hydrogénation de l'étape a) comprend un métal choisi dans le groupe constitué par titane, zirconium, cobalt, niobium, tantale, fer, molybdène, tungstène, ruthénium, rhodium, iridium, nickel, palladium, et platine.

12. Procédé selon la revendication 1, dans lequel le catalyseur de déshydrogénation de l'étape b) comprend un métal choisi dans le groupe constitué par titane, zirconium, cobalt, niobium, tantale, fer, molybdène, tungstène, ruthénium, rhodium, iridium, nickel, palladium, et platine.

13. Procédé selon la revendication 1, dans lequel le substrat conjugué-pi étendu au moins partiellement hydrogéné comprend un mélange de conformères du substrat au moins partiellement hydrogéné.

14. Procédé selon la revendication 1, dans lequel le substrat conjugué-pi étendu au moins partiellement hydrogéné est un liquide dans les conditions de déshydrogénation de l'étape b).

15. Procédé selon la revendication 1, dans lequel le substrat conjugué-pi étendu au moins partiellement hydrogéné est un solide dans les conditions de déshydrogénation de l'étape b).

16. Procédé selon la revendication 1, dans lequel le substrat conjugué-pi étendu et le substrat conjugué-pi étendu au moins partiellement hydrogéné sont des liquides dans les conditions de déshydrogénation de l'étape b).

17. Procédé de stockage de l'hydrogène consistant à mettre en contact du gaz d'hydrogène avec un substrat conjugué-pi étendu solide tel que défini selon l'une quelconque des revendications 1 à 3 en présence d'une quantité efficace d'un catalyseur d'hydrogénation dans des conditions d'hydrogénation afin d'hydrogéner au moins partiellement le substrat conjugué-pi étendu.

18. Procédé de stockage de l'hydrogène consistant à mettre en contact du gaz d'hydrogène à une pression partielle d'hydrogène supérieure à environ 6,7 bar et à une température comprise entre environ 50 °C et environ 300 °C avec un substrat conjugué-pi étendu solide tel que défini selon l'une quelconque des revendications 1 à 3 en présence d'une quantité efficace d'un catalyseur d'hydrogénation afin d'hydrogéner au moins partiellement le substrat conjugué-pi étendu.

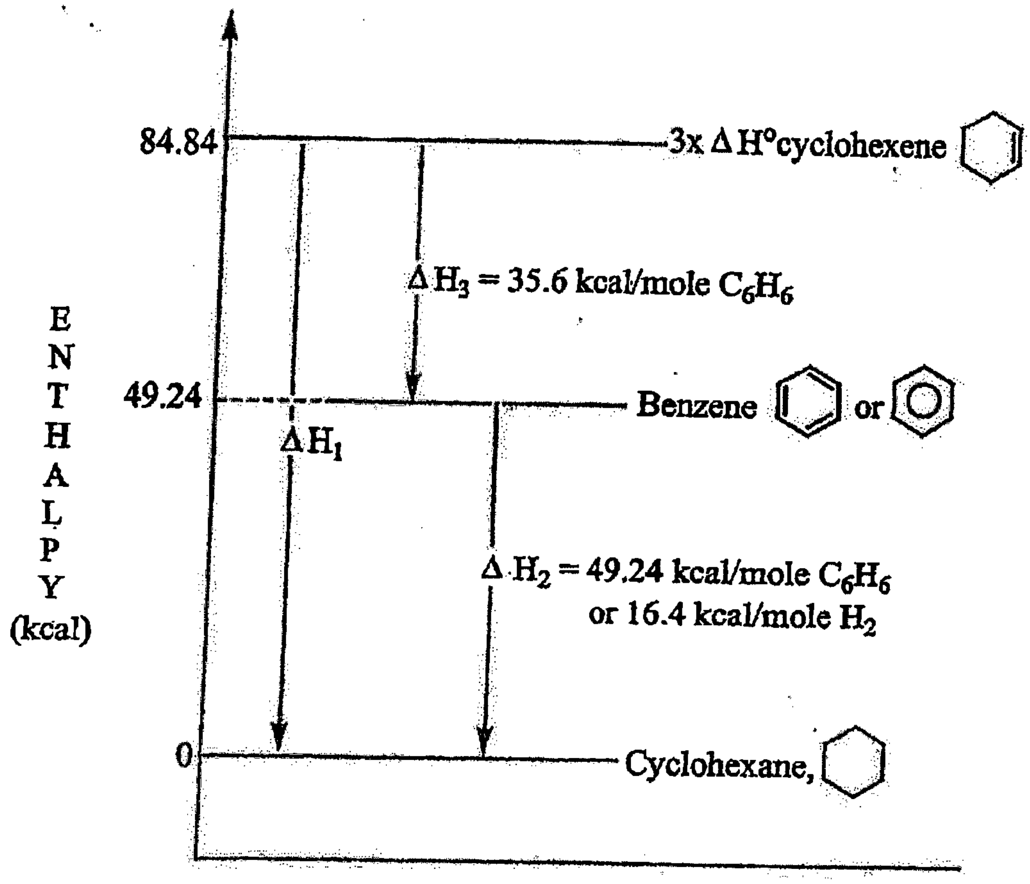
E N T H A L P Y (kcal)
84.84
49.24
0
3x Δ H°cyclohexene
Δ H3 = 35.6 kcal/mole C6H6
Benzene
or
Δ H1
Δ H2 = 49.24 kcal/mole C6H6
or 16.4 kcal/mole H2
Cyclohexane,

*Fig. 1*

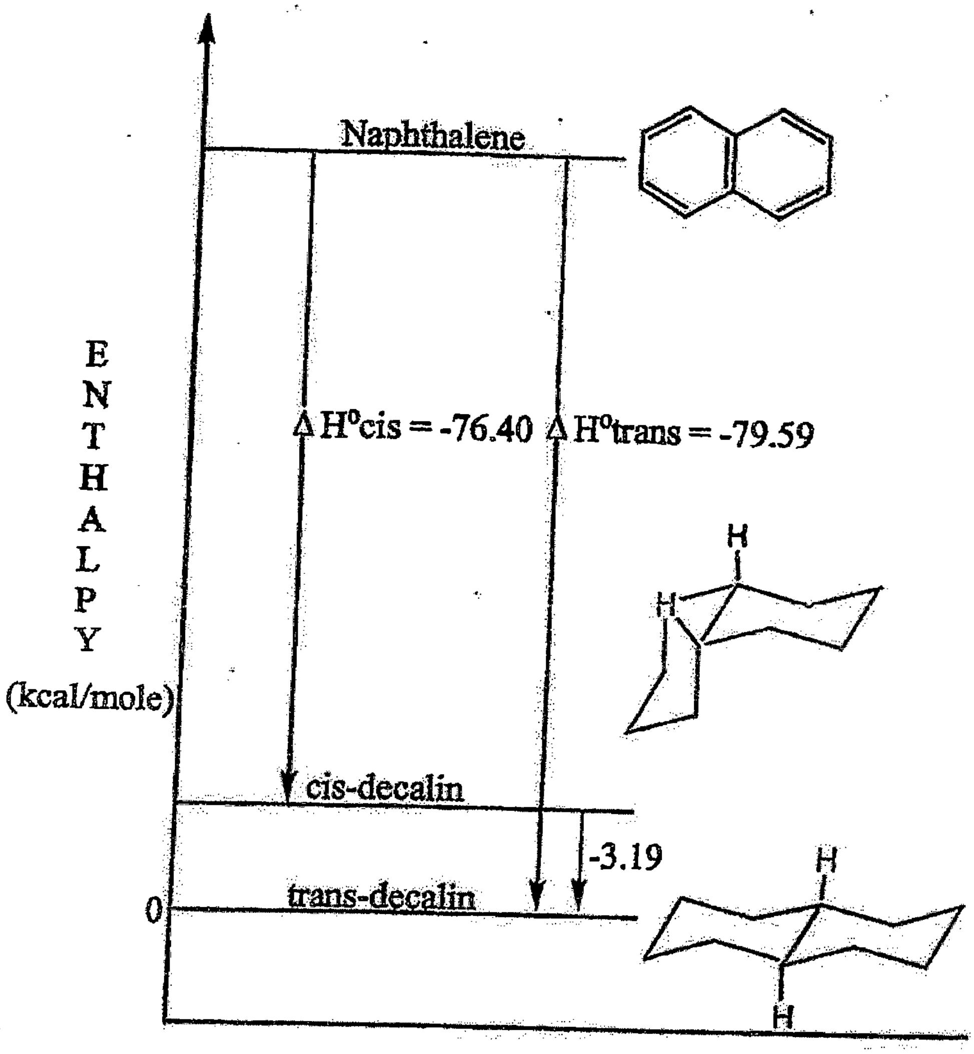
Naphthalene
ENTHALPY
(kcal/mole)
ΔH°cis = -76.40
ΔH°trans = -79.59
cis-decalin
-3.19
0
trans-decalin

*Fig. 2*

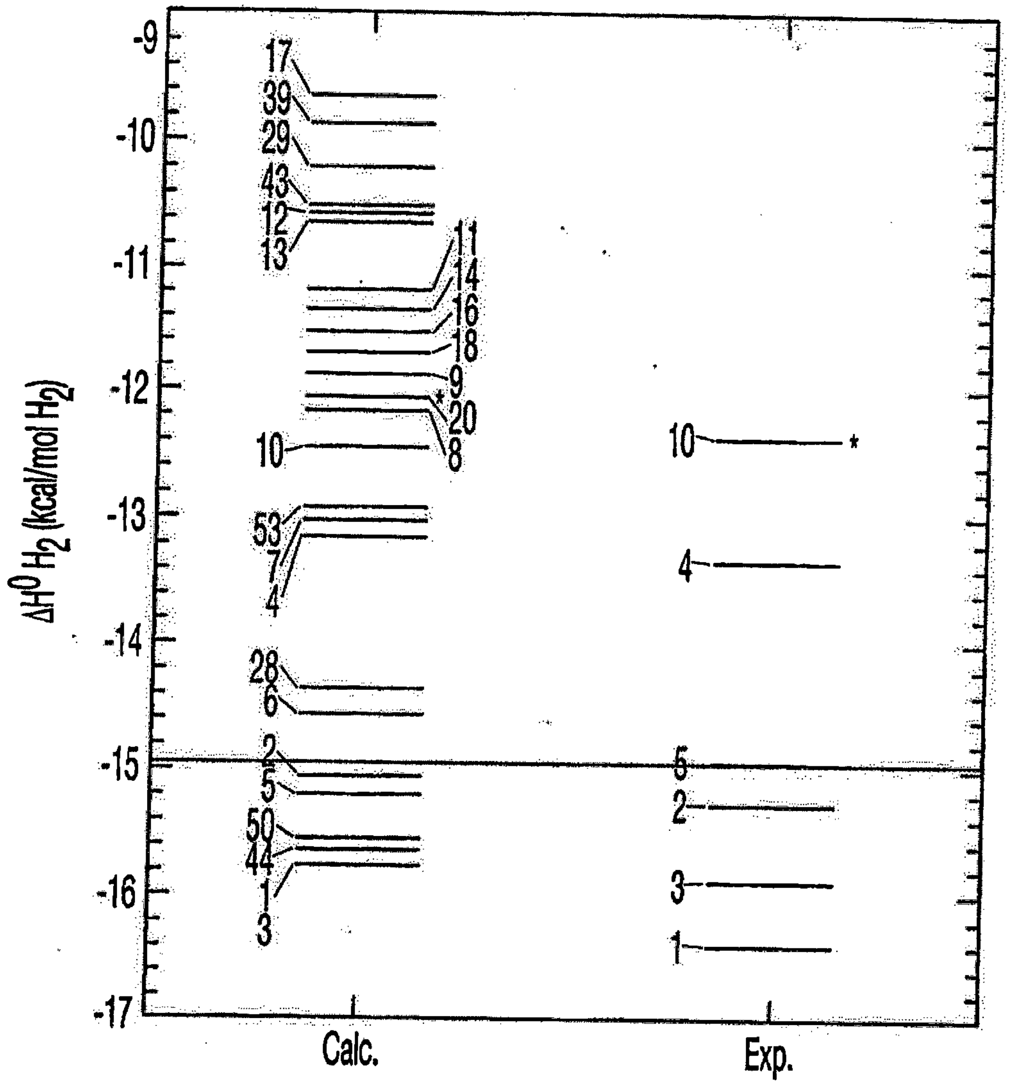
-9
-10
-11
-12
-13
-14
-15
-16
-17
ΔH0 H2 (kcal/mol H2)
17
39
29
43
12
13
11
14
16
18
9
20
8
10
53
7
4
28
6
2
5
50
44
1
3
10
4
5
2
3
1
Calc.
Exp.

*Fig. 3*

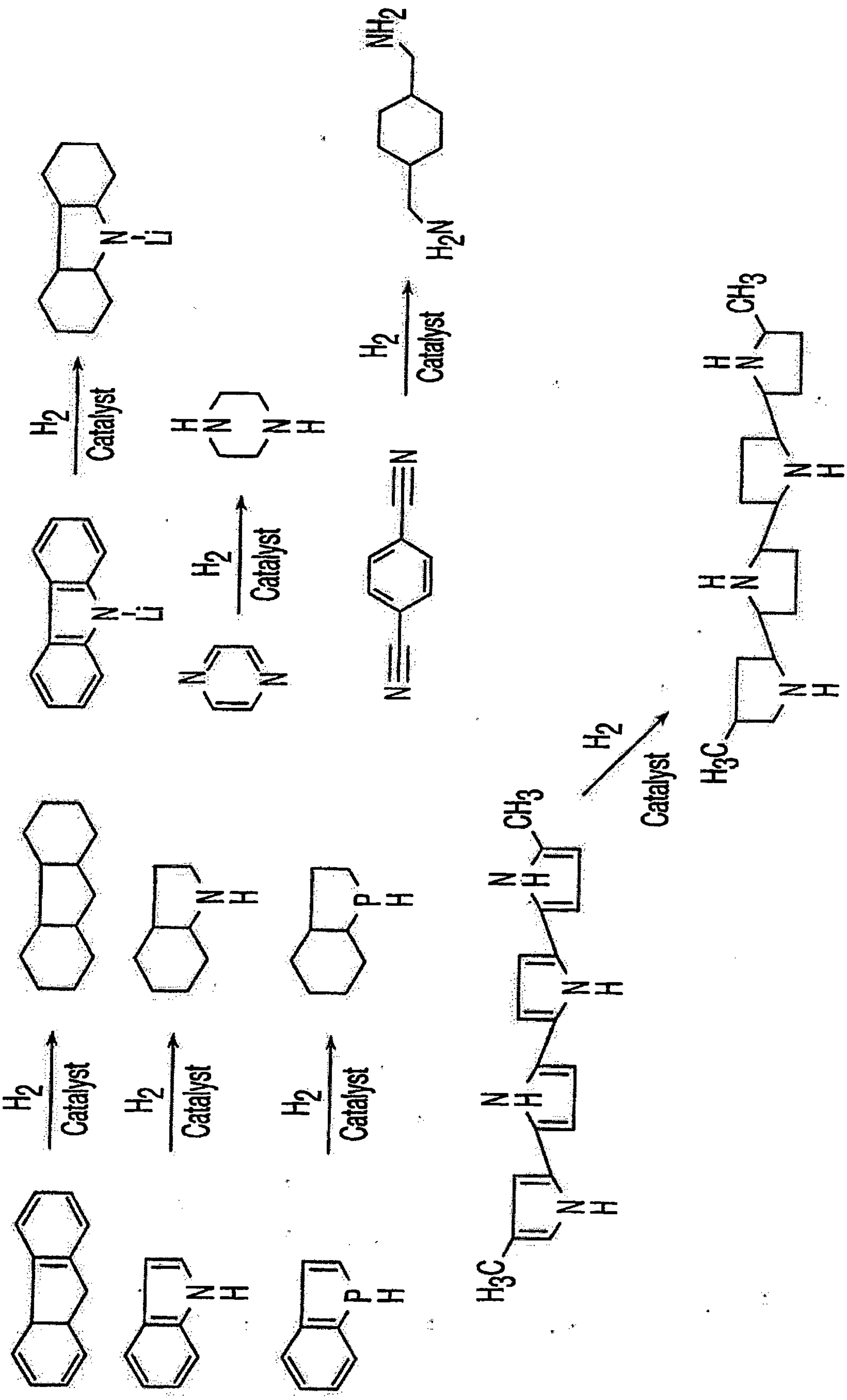
H2
Catalyst
H2
Catalyst
H2
Catalyst
H2
Catalyst
H2
Catalyst
H2
Catalyst
H2
Catalyst

*Fig. 4*

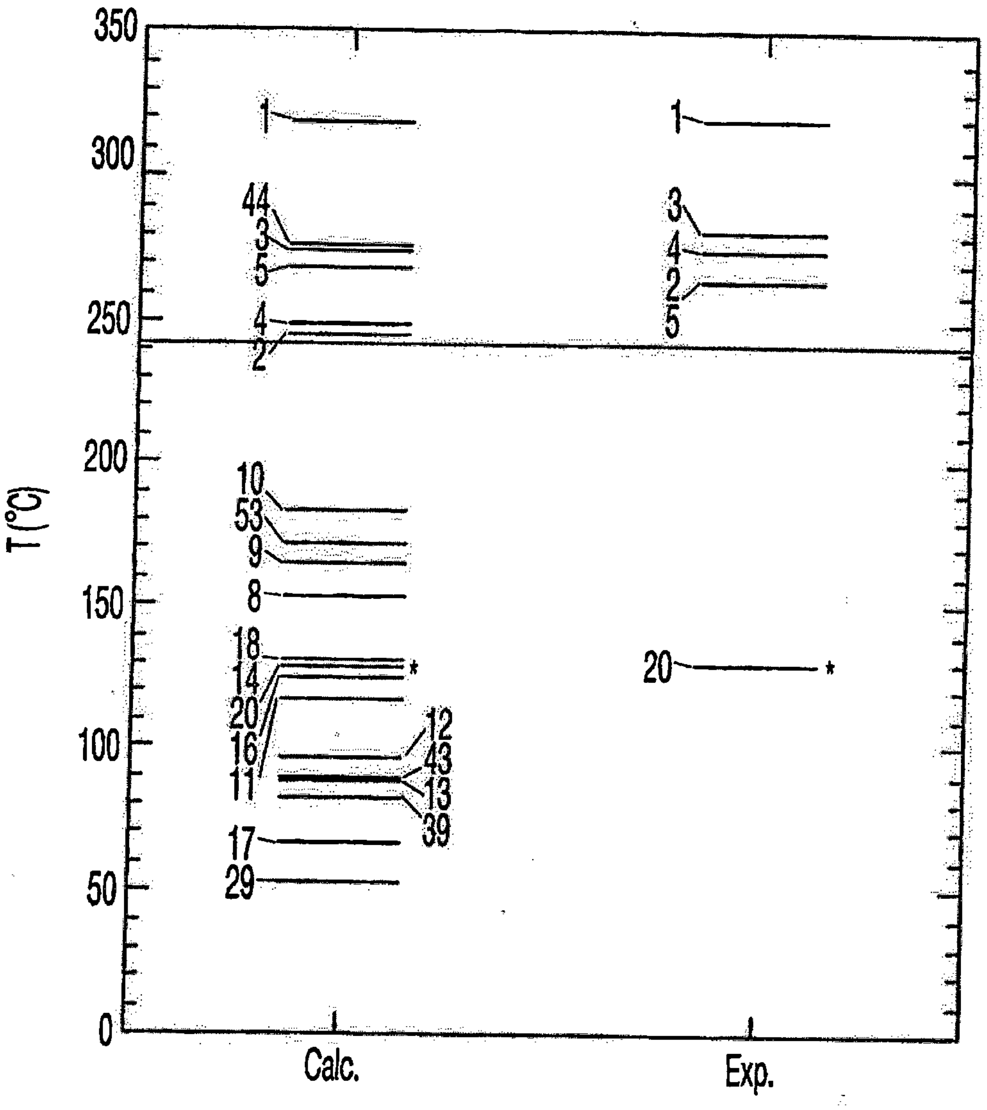
350
300
250
200
150
100
50
0
T (°C)
Calc.
Exp.
1
44
3
5
4
2
10
53
9
8
18
14
20
16
11
17
29
12
43
13
39
*
1
3
4
2
5
20
*

*Fig. 5*

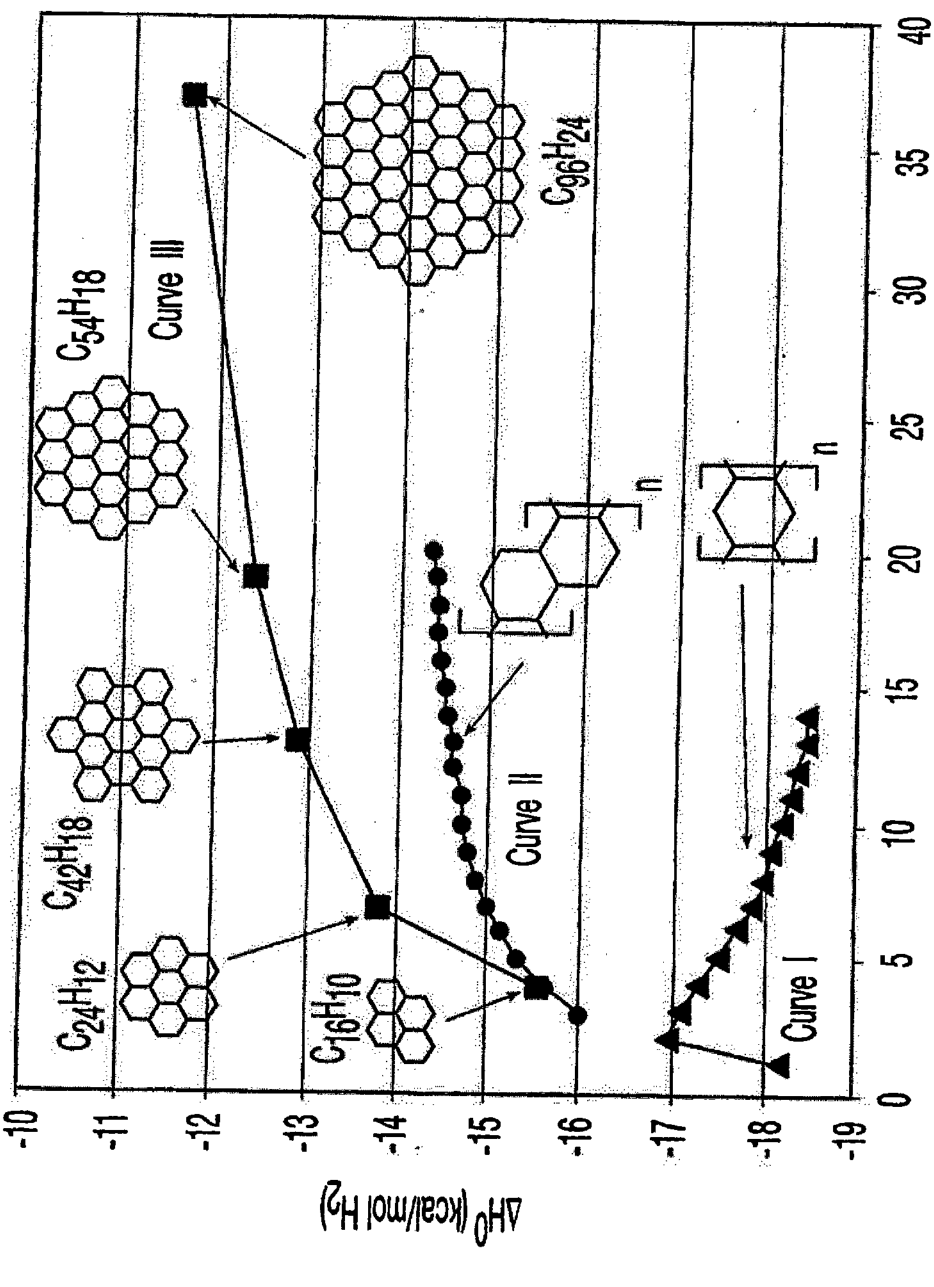
ΔH0 (kcal/mol H2)
-10
-11
-12
-13
-14
-15
-16
-17
-18
-19
0
5
10
15
20
25
30
35
40
Number of Rings
C24H12
C42H18
C54H18
C96H24
C16H10
Curve I
Curve II
Curve III
n
n

*Fig. 6*

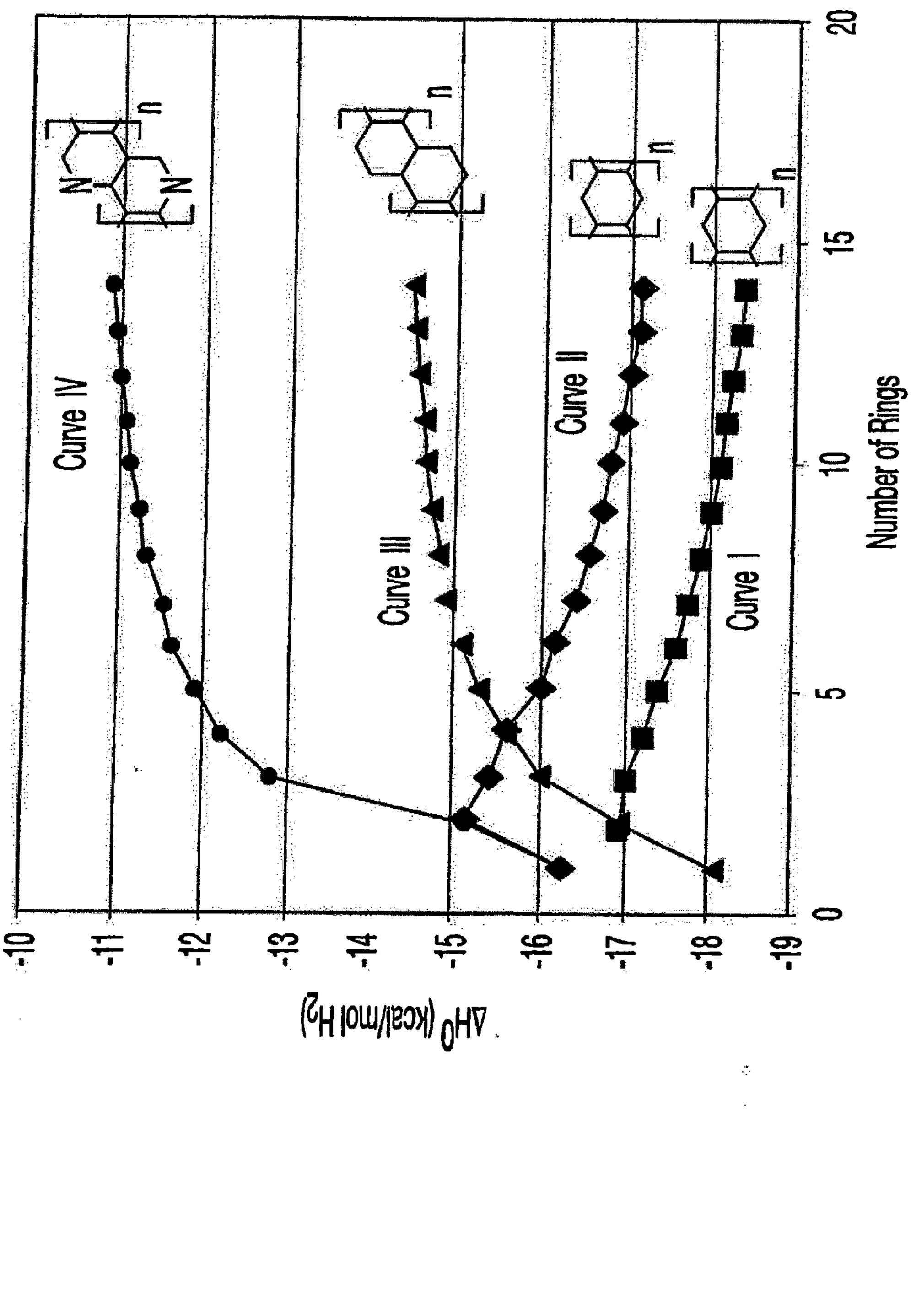
Curve IV
Curve III
Curve II
Curve I
ΔH0 (kcal/mol H2)
-10
-11
-12
-13
-14
-15
-16
-17
-18
-19
0
5
10
15
20
Number of Rings

*Fig. 7*

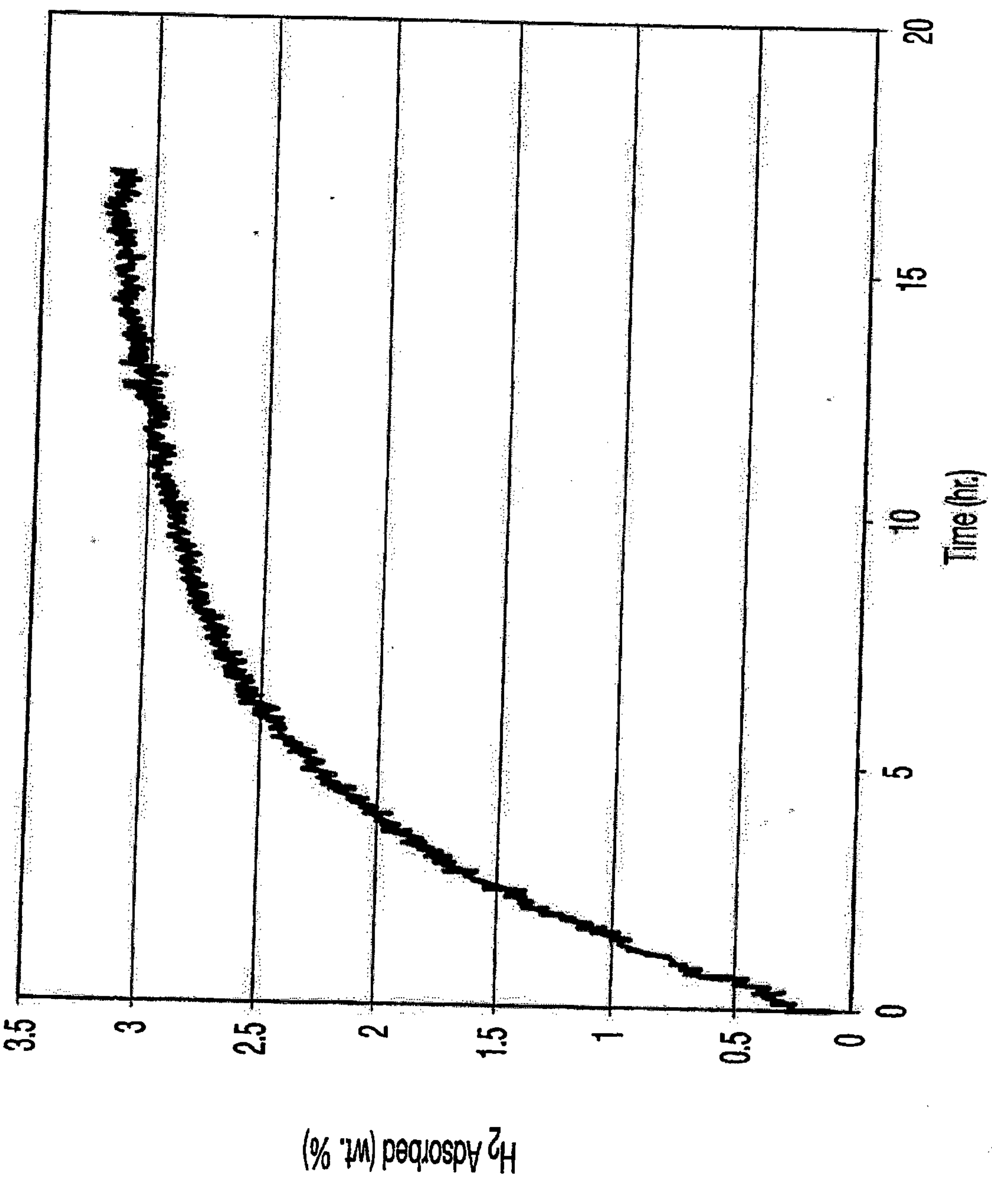


*Fig. 8*

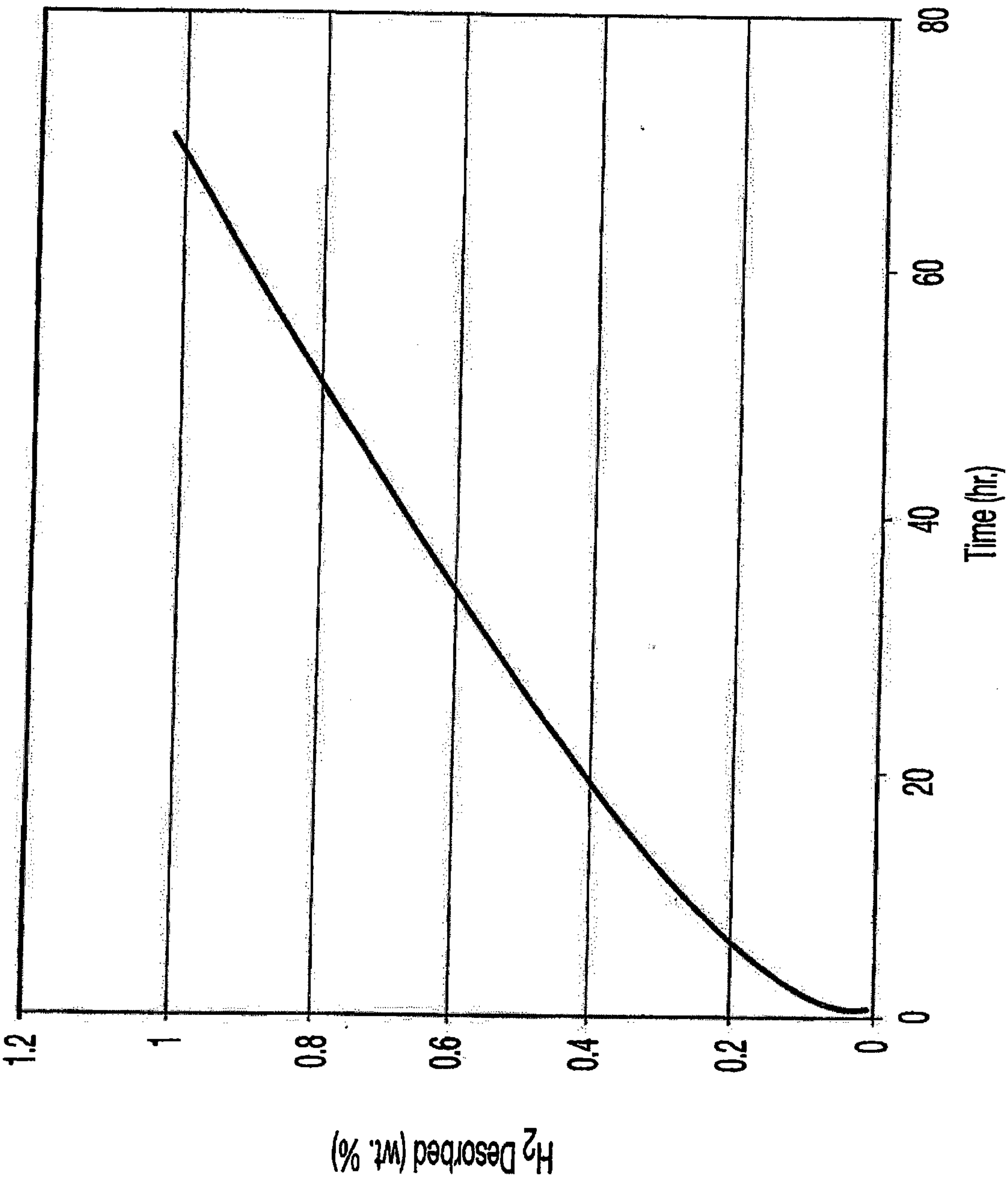


*Fig. 9*

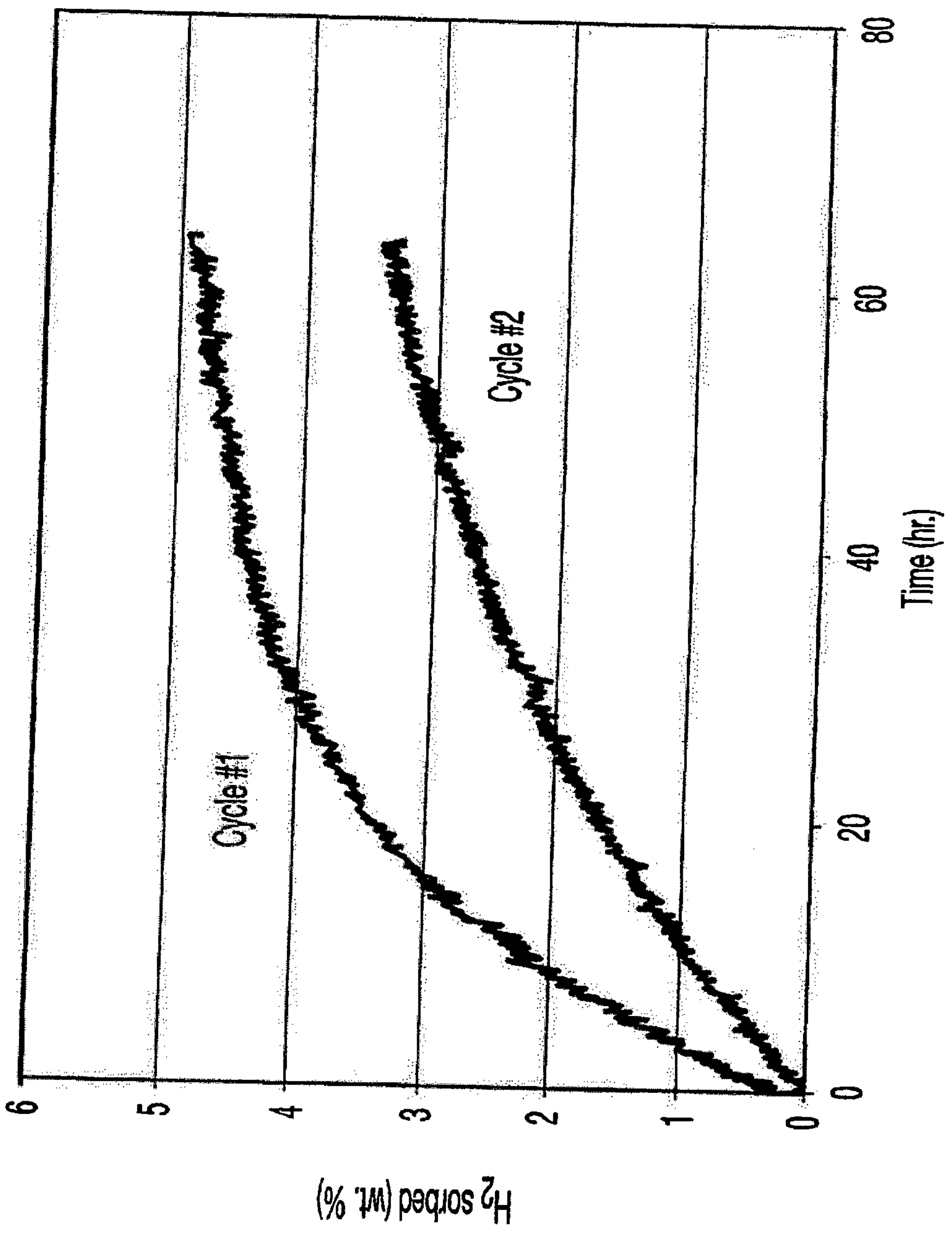


*Fig. 10*

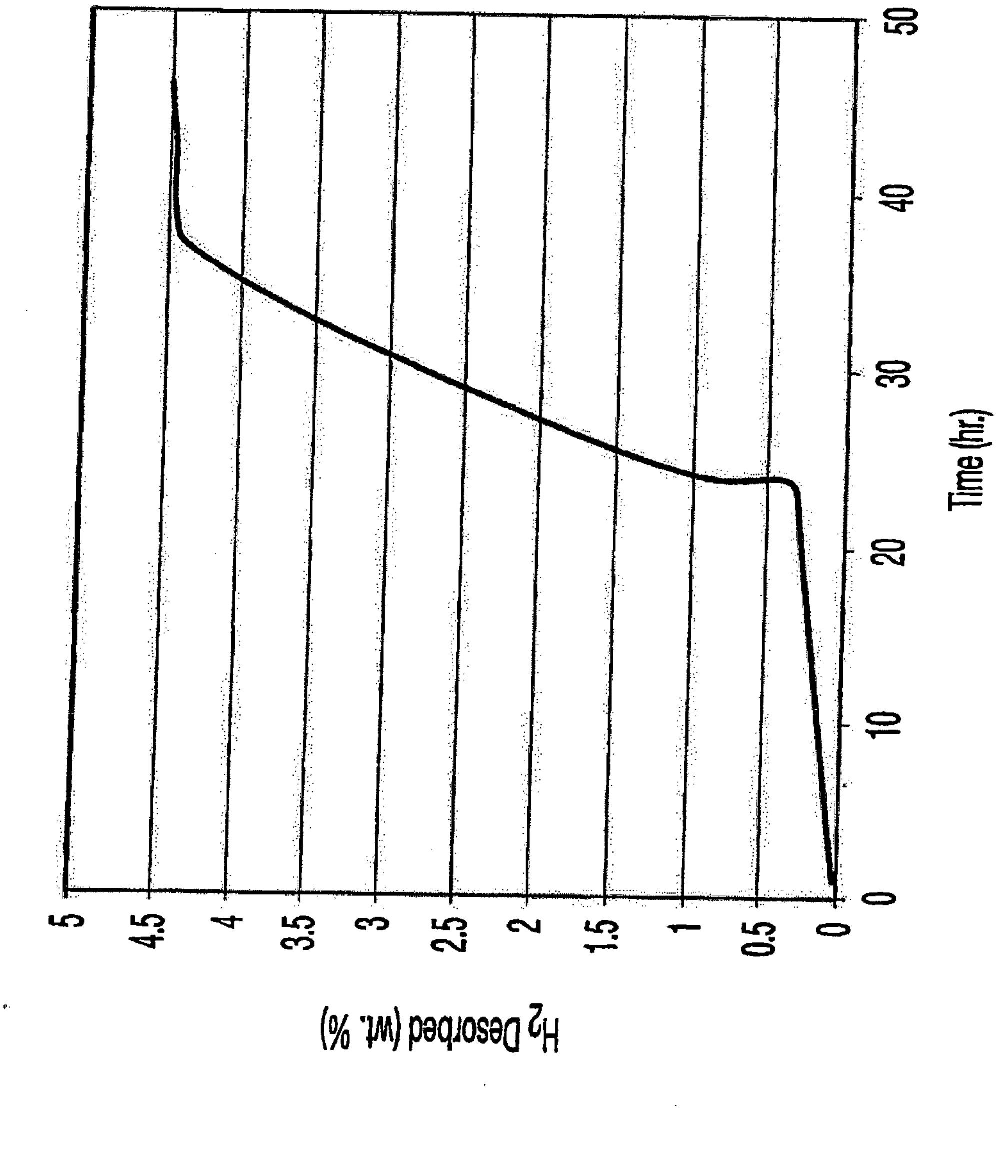


*Fig. 11*

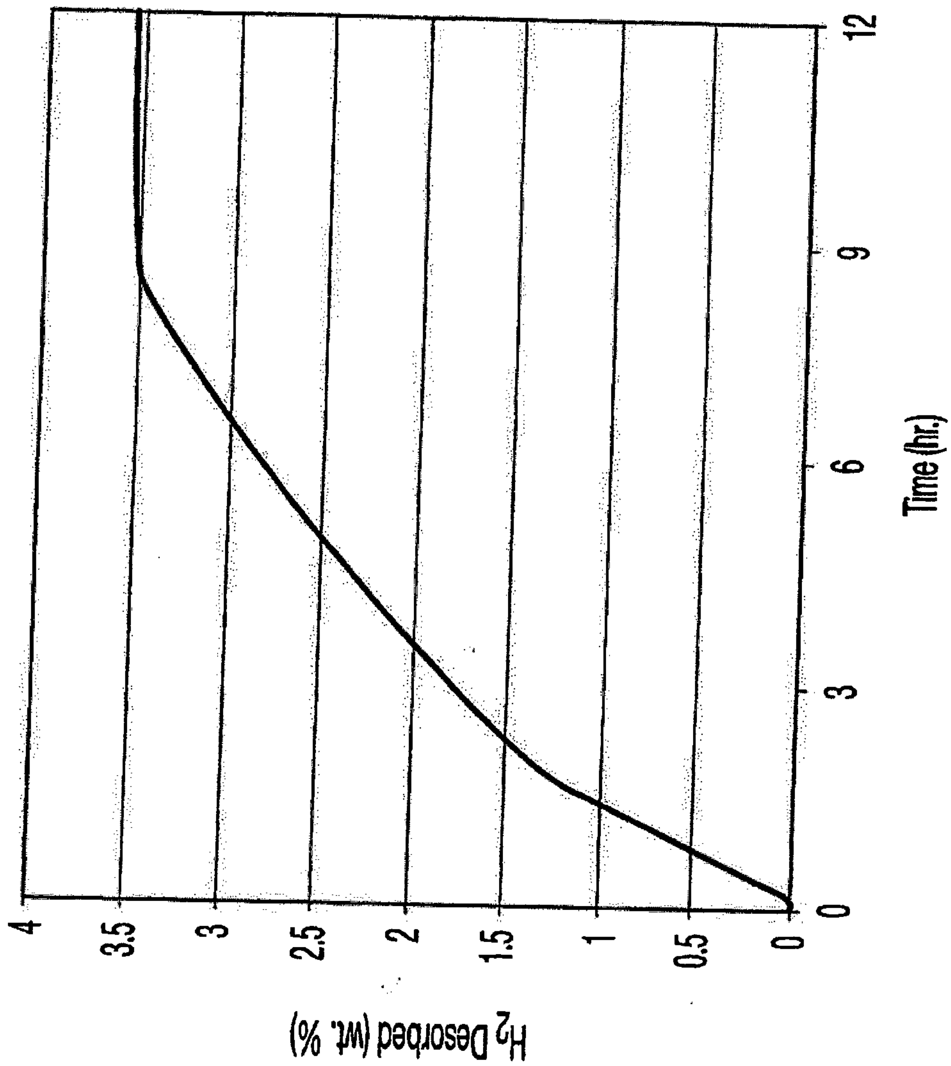


*Fig. 12*

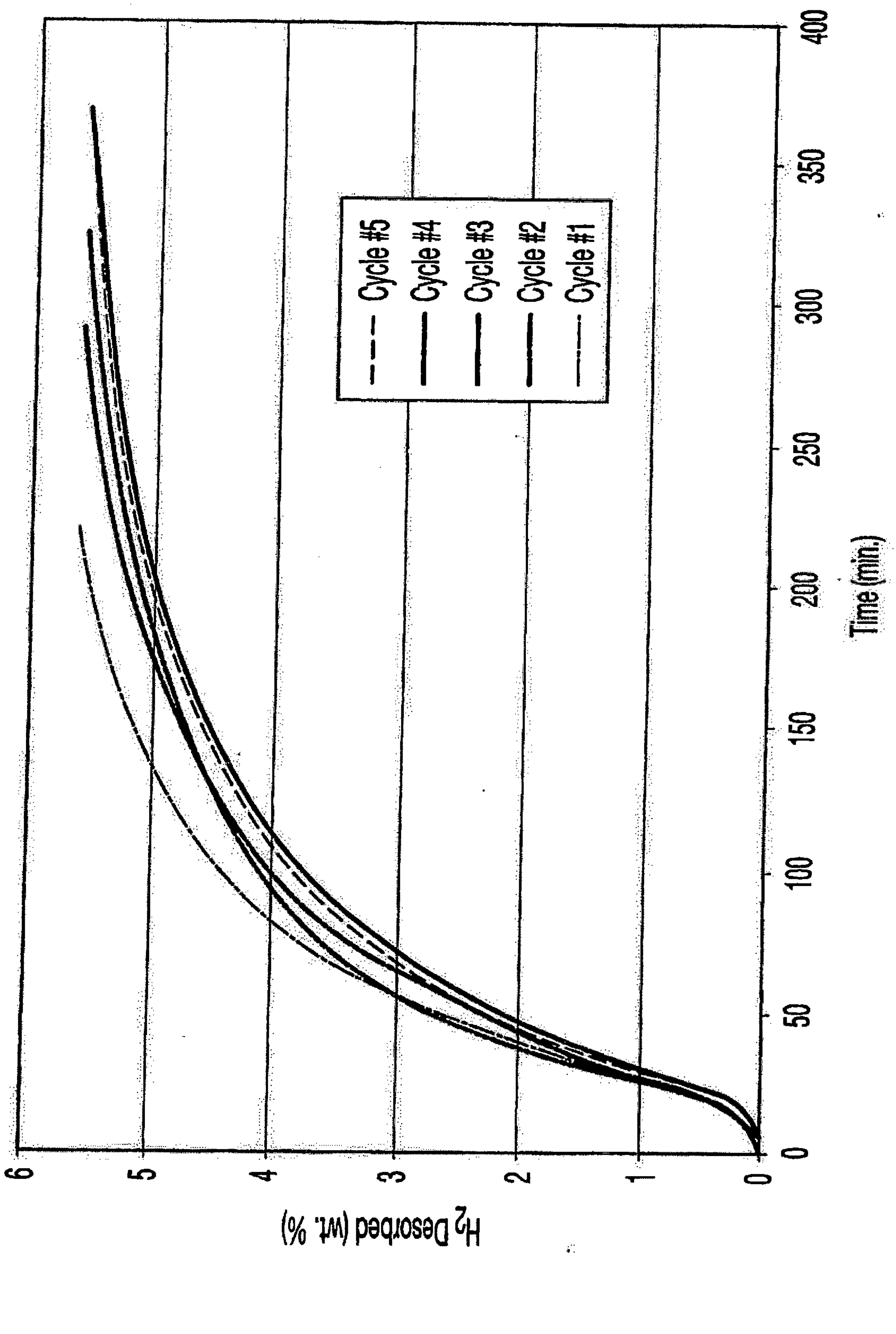
H2 Desorbed (wt. %)
0
1
2
3
4
5
6
0
50
100
150
200
250
300
350
400
Time (min.)
Cycle #5
Cycle #4
Cycle #3
Cycle #2
Cycle #1

*Fig. 13*

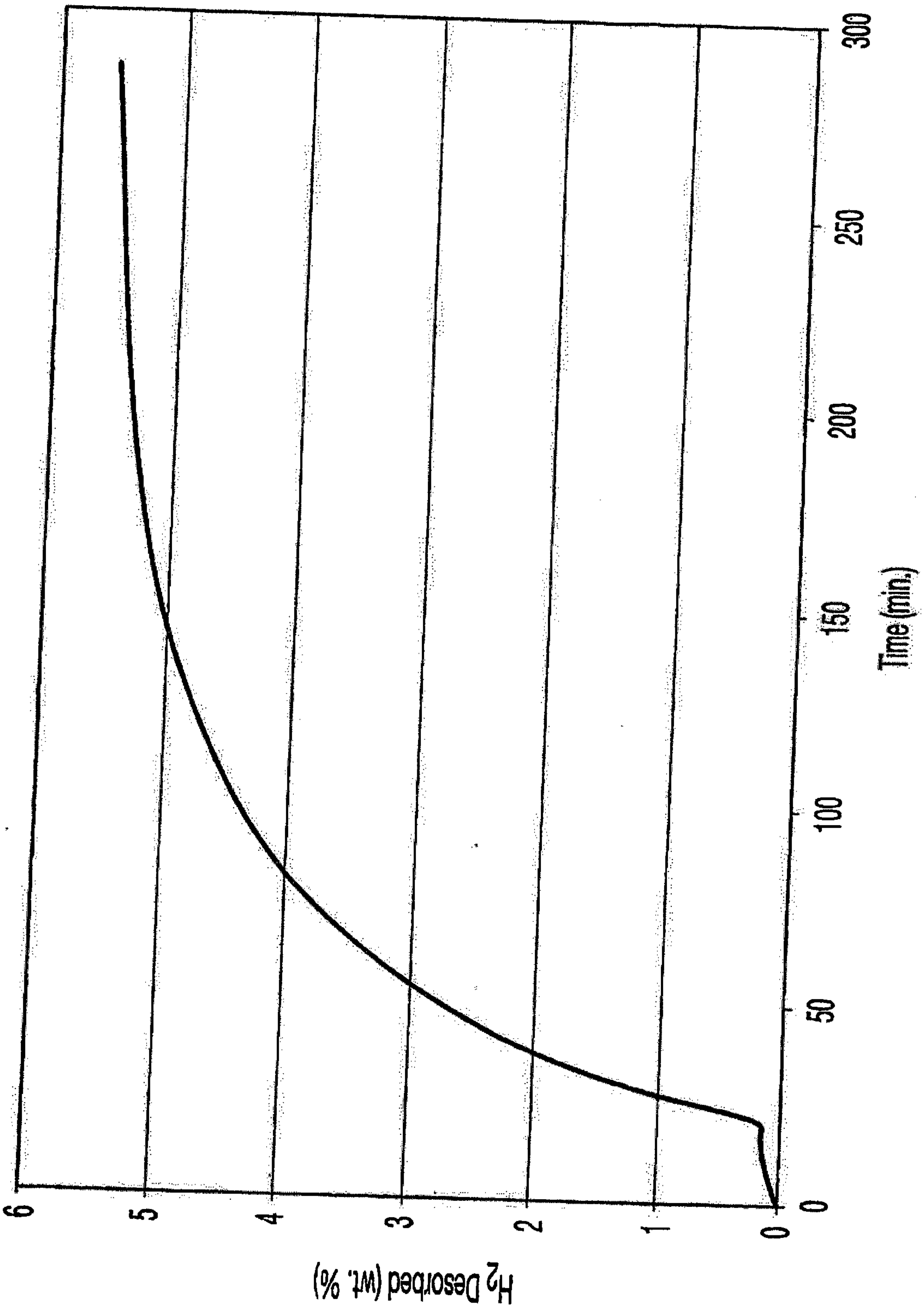


*Fig. 14*

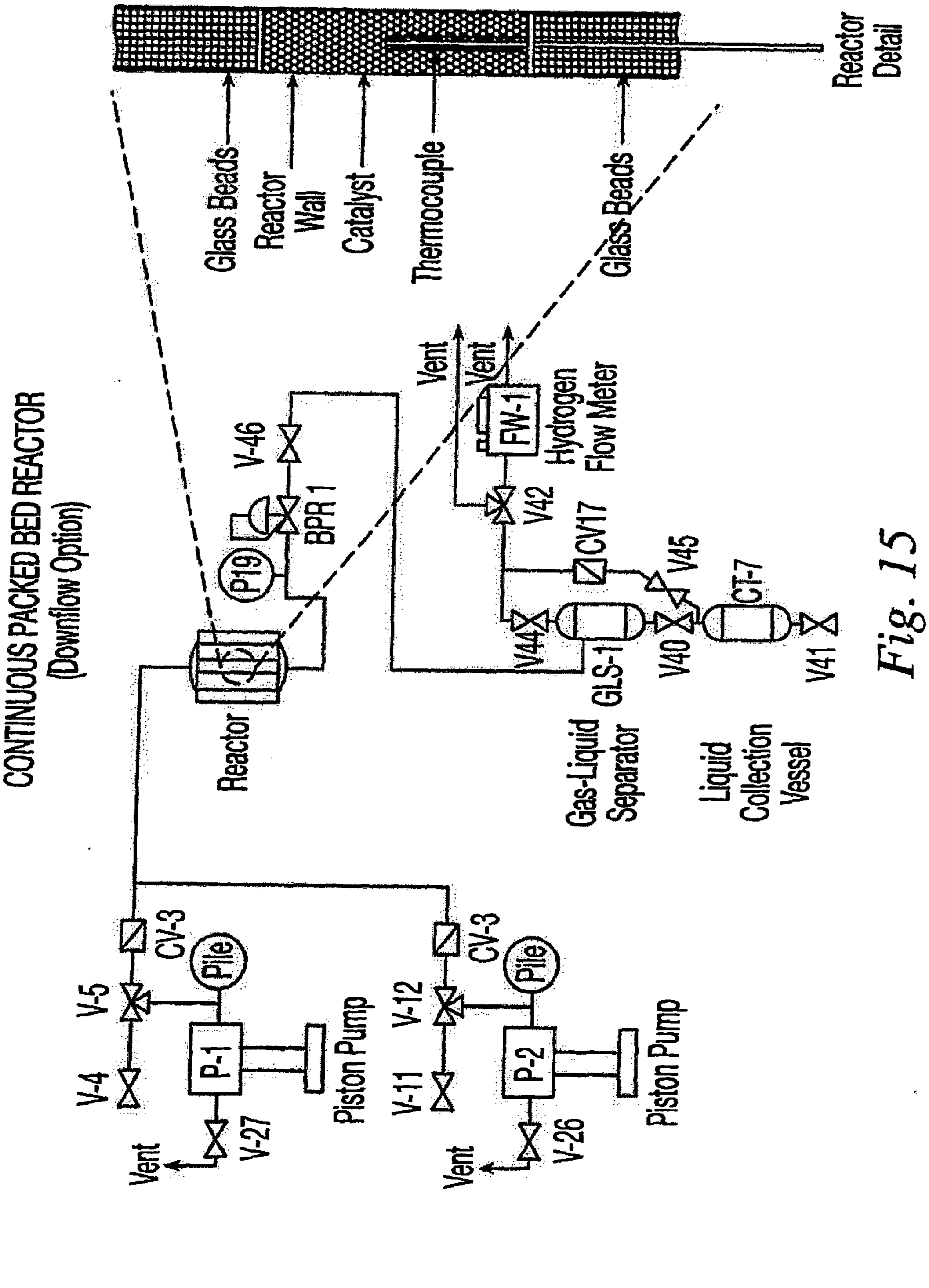
CONTINUOUS PACKED BED REACTOR
(Downflow Option)
Glass Beads
Reactor
Wall
Catalyst
Thermocouple
Glass Beads
Reactor
Detail
Reactor
P19
BPR 1
V-46
Vent
Vent
FW-1
Hydrogen
Flow Meter
V42
CV17
V45
V44
GLS-1
V40
CT-7
V41
Gas-Liquid
Separator
Liquid
Collection
Vessel
V-4
V-5
CV-3
PIle
P-1
V-27
Vent
Piston Pump
V-11
V-12
CV-3
PIle
P-2
V-26
Vent
Piston Pump

*Fig. 15*

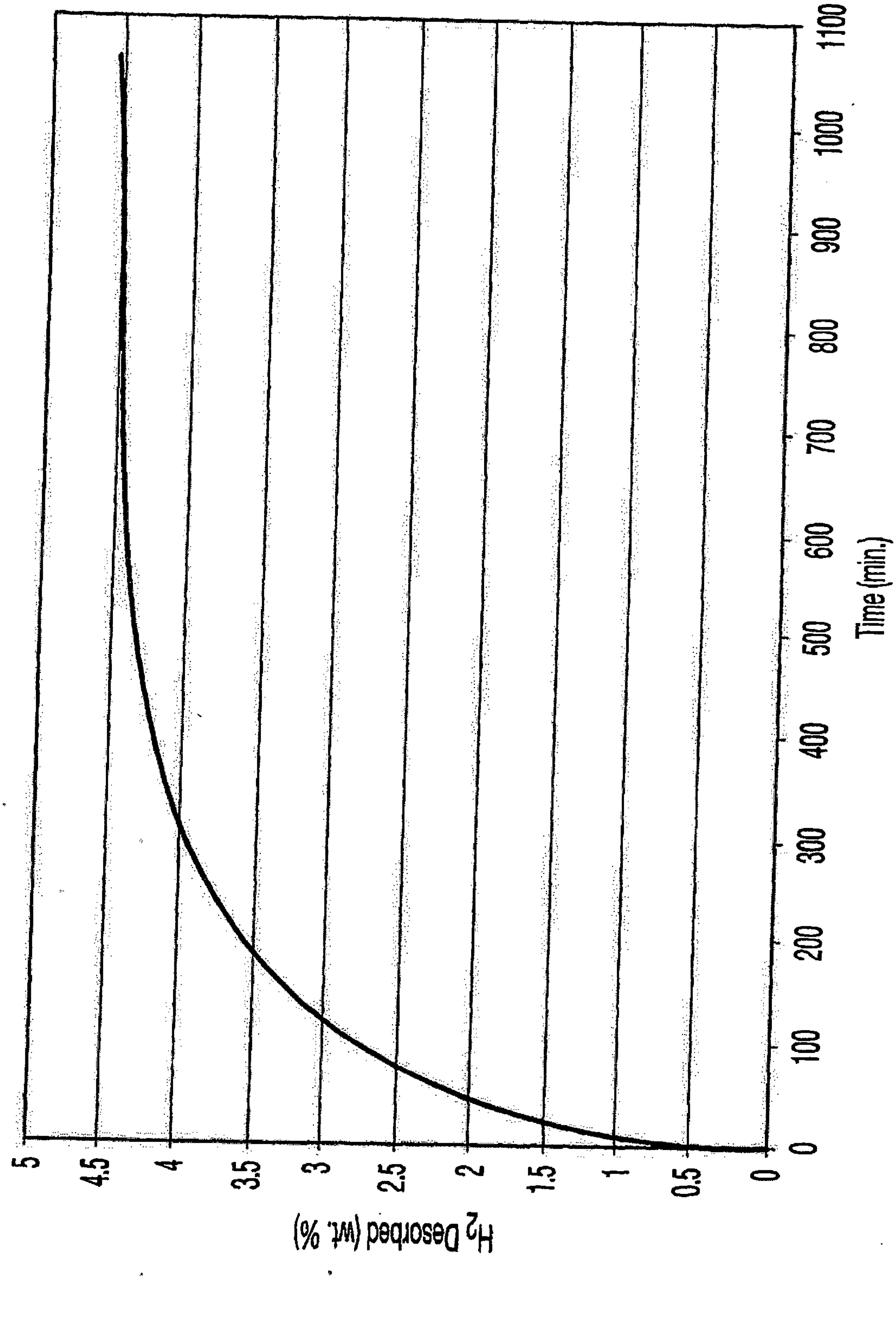
H2 Desorbed (wt. %)
0
0.5
1
1.5
2
2.5
3
3.5
4
4.5
5
Time (min.)
0
100
200
300
400
500
600
700
800
900
1000
1100

*Fig. 16*

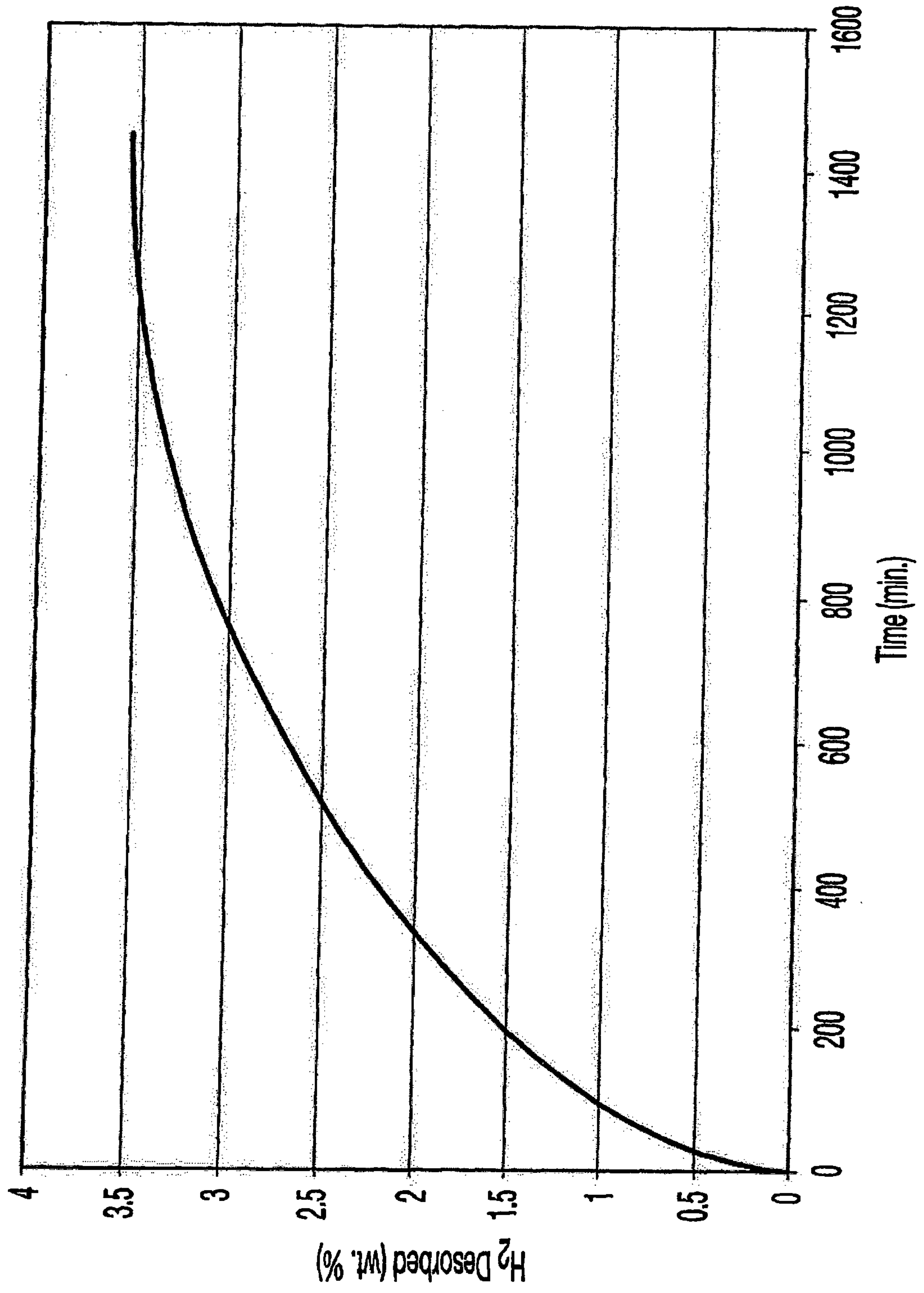

0
0.5
1
1.5
2
2.5
3
3.5
4
H2 Desorbed (wt. %)
0
200
400
600
800
1000
1200
1400
1600
Time (min.)


*Fig. 17*

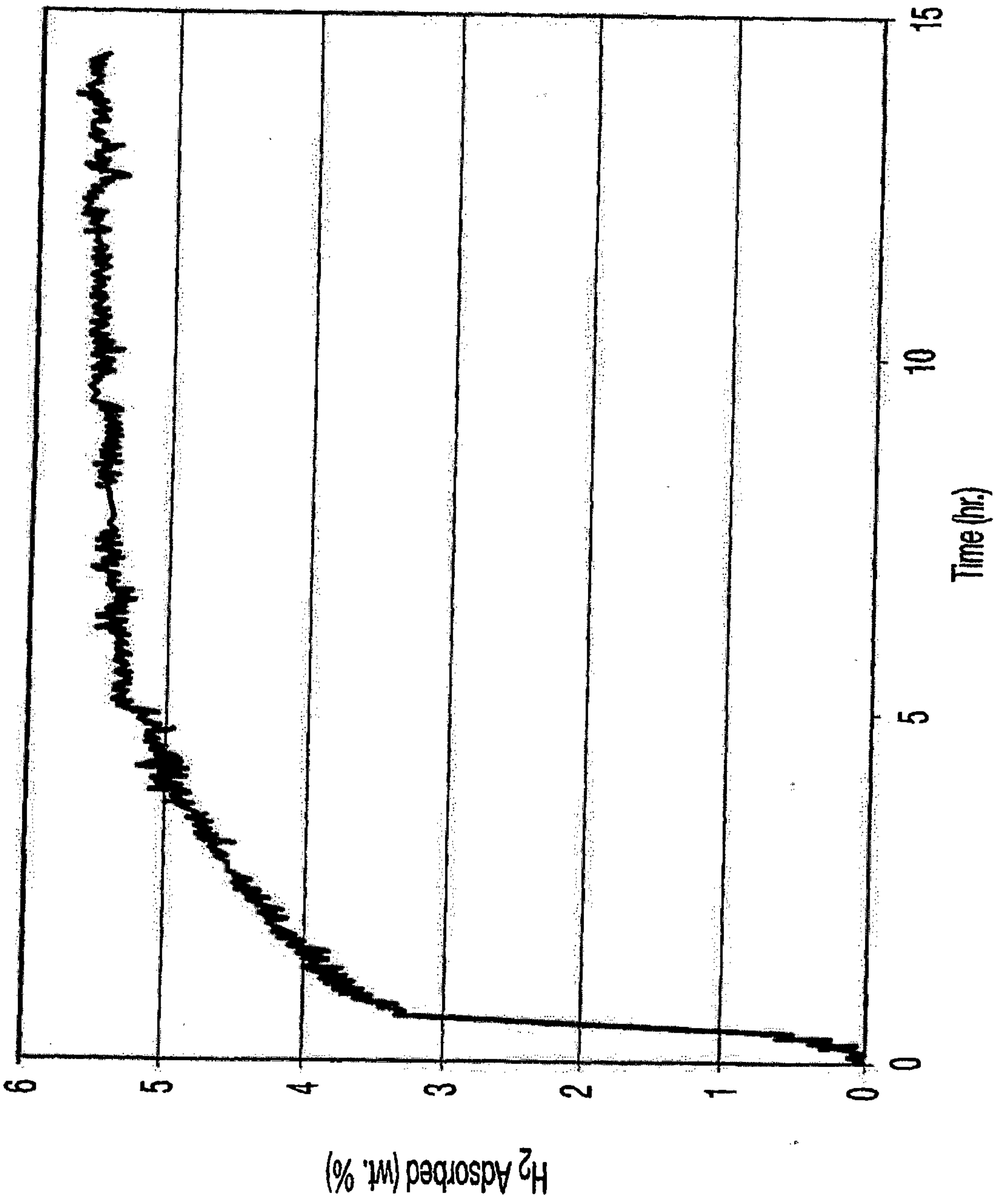


*Fig. 18*

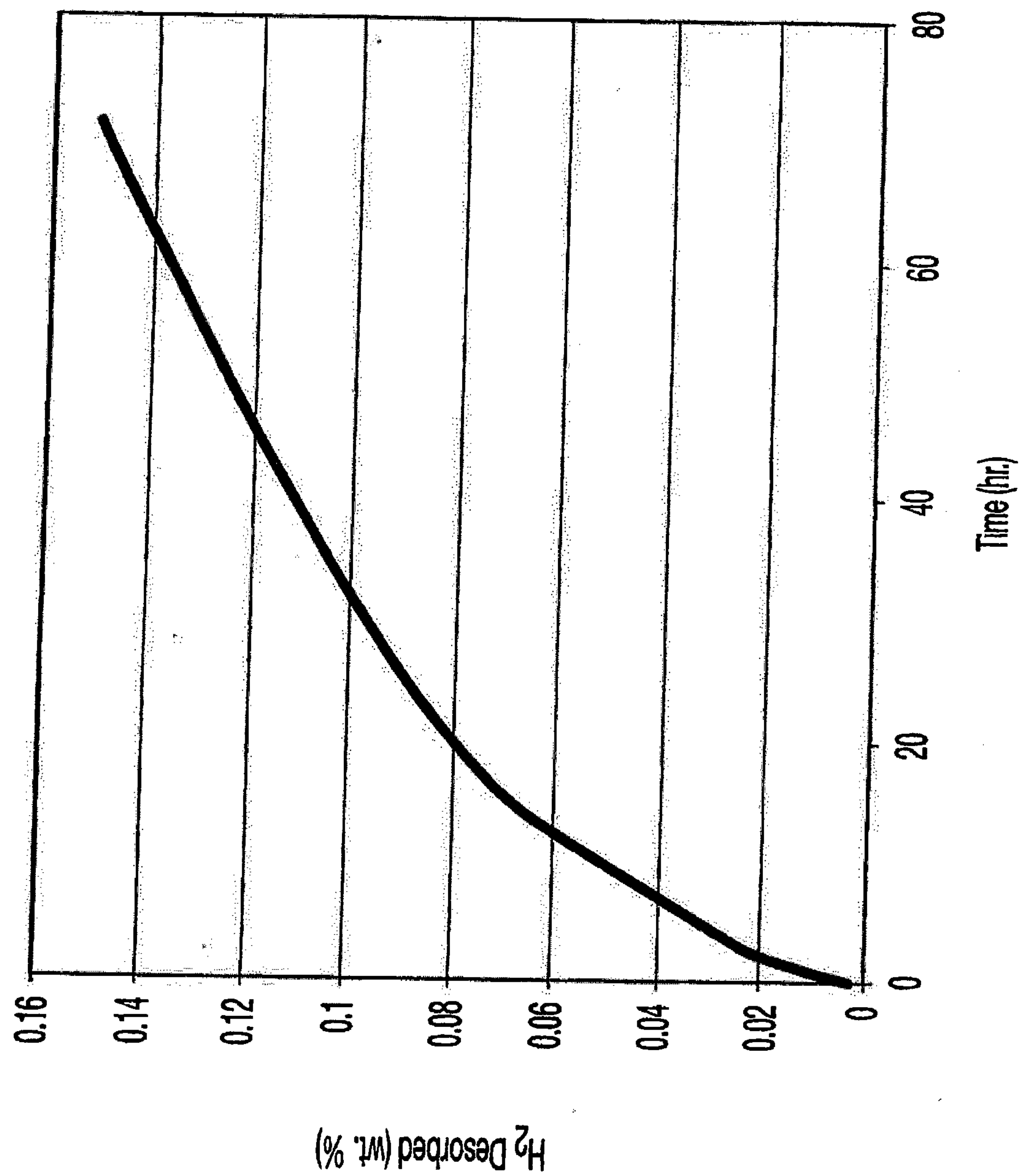

$H_2$ Desorbed (wt. %)
0.16
0.14
0.12
0.1
0.08
0.06
0.04
0.02
0
Time (hr.)
0
20
40
60
80


*Fig. 19*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20020096048 A, Cooper and Pez
- US 4567033 A, Kesten
- US 6074447 A, Jensen
- JP 20001110437 B
- JP 2002134141 B
- JP 2002134141 A
- DE 100557M A1


### Non-patent literature cited in the description


- **A. C. DILLON et al.** *Nature,* 1997, vol. 386, 377-379
- **CHAMBERS et al.** *J. Phys. Chem. B,* 1998, vol. 102, 4253-4256
- **A. C. DILLON ; M. J. HEBEN.** *Appl. Phys. A,* 2001, vol. 72, 133-142
- **S. J. CHO et al.** *ACS Fuel Chemistry Division Preprints,* 2002, vol. 47 (2), 790-791
- **N. KARIYA et al.** *Applied Catalysis A,* 2002, vol. 233, 91-102
- **R.O. LOUFTY ; E.M. VEKSTER.** Investigation of Hydrogen Storage in Liquid Organic Hydrides. *Proceedings of the International Hydrogen Energy Forum 2000, Munich Germany,* 2000, 335-340
- *Chem. Eng.,* March 2003, 21
- **G. PEZ.** *Toward New Solid and Liquid Phase Systems for the Containment, Transport and Deliver of Hydrogen,* May 2003, http://www.eere.energy.gov/hydrogenandfuelcells/pdfs/solid_liquid_carriers_pres_air_pro d.pdf
- **S. HODOSHIMA et al.** describes using decalin and naphthalene as the hydrogenated substrate and aromatic substrate, respectively. *Int. J. Hydrogen Energy,* 2003, vol. 28, 1255-1262
- **E. NEWSOME et al.** describes using methylcyclohexane and toluene as the hydrogenated substrate and aromatic substrate, respectively. *Int. J. Hydrogen Energy,* 1998, vol. 23, 905-909
- **D. YOUNG.** Computational Chemistry - A Practical Guide for Applying Techniques to Real World Problems. Wiley - Interscience, 2001
- *NIST Standard Reference Database No. 69,* March 2003
- **E. CLAR.** Polycyclic Hydrocarbons. Academic Press, 1984
- Extended polycyclic aromatic hydrocarbons are available. Lancaster Synthesis, Windham, NH; and Acros Organics. Aldrich Chemical Company
- **E. CLAR.** Polycyclic Hydrocarbons. Academic Press, 1964
- **J. C. FETZER.** *Large (C>=24) Polycyclic Aromatic Hydrocarbons,* 206-212
- **I. MOCHIDA et al.** *Carbon,* 2000, vol. 38, 305-328
- *Carbon,* 1988, vol. 26, 843-852
- **P. V. RYABCHENKO et al.** *Khimiya Tverdogo Topliva,* 1985, vol. 19, 129-134
- *J. Org. Chem.,* 1980, vol. 4, 2797
- **HODOSHIMA et al.** *Int. J. Hydrogen Energy,* 2003, vol. 28, 1255-1262